# EUROPÄISCHE PATENTSCHRIFT

(11) **EP 2 708 332 B1**
(45) Veröffentlichungstag und Bekanntmachung des Hinweises auf die Patenterteilung: **16.11.2016**
(21) Anmeldenummer: 12006527.1
(22) Anmeldetag: 17.09.2012
(51) Int. Cl.: B25J 7/00, B25J 17/00

(54) **Gelenkvorrichtung, Mikromanipulatoranordnung mit dieser Gelenkvorrichtung und Verfahren zur Benutzung**
Articulated device, micro-manipulator assembly with same and method for use
Dispositif d'articulation, agencement de micromanipulateur avec ce dispositif d'articulation et procédé d'utilisation

(43) Veröffentlichungstag der Anmeldung: 19.03.2014
(73) Patentinhaber: EPPENDORF AG, 22339 Hamburg (DE)
(72) Erfinder: Flucke, Dr. Christian, 22395 Hamburg (DE)
(74) Vertreter: Ricker, Mathias

(56) Entgegenhaltungen:
- DE-A1- 4 403 687
- US-A- 5 620 169
- D. Knoffe ET AL: "TransferMan NK2 - Operating manual", Eppendorf AG , 29. Juni 2012 (2012-06-29), XP55068490, Gefunden im Internet: URL:http://eshop.eppendorfna.com/documents /download/Operating_Manual_TransferMan_NK2 -US [gefunden am 2013-06-27]

## Beschreibung

Die vorliegende Erfindung betrifft eine Gelenkvorrichtung für eine Mikromanipulatoranordnung, zur Führung einer Relativbewegung von Bauteilen in eine Zielposition, insbesondere bei der Mikromanipulatoranordnung, betrifft eine Mikromanipulatoranordnung mit dieser Gelenkvorrichtung und betrifft ein Verfahren zur Benutzung dieser Gelenkvorrichtung oder dieser Mikromanipulatoranordnung.

Bei Mikromanipulatoranordnungen wird eine solche Gelenkvorrichtung dazu verwendet, um ein erstes Bauteil, zum Beispiel einen Werkzeughalter mit Werkzeug, z.B. schwenkbar, beweglich an ein zweites Bauteil zu koppeln, zum Beispiel an den Schlitten einer motorisierten Bewegungseinrichtung.

Mikromanipulatoranordnungen erfordern eine große Präzision bei der Bewegung und Positionierung ihrer Bauteile. Eine Mikromanipulation kann die Manipulation künstlicher Objekte vorsehen, wie z.B. Mikrosysteme oder Nanosysteme und deren Komponenten. Sie kann insbesondere die Manipulation biologischer Objekte, wie z.B. lebender Zellen oder Mikroorganismen betreffen. Beide Einsatzbereiche erfordern eine hohe Zuverlässigkeit und Präzision bei der Anordnung der Manipulationswerkzeuge, z.B. Kapillaren, Sonden oder Elektroden, in einer gewünschten Arbeitposition, in der ein oft mikroskopisch kleines Objekt mechanisch manipuliert wird.

Gelenkvorrichtungen der vorliegenden Art sind insbesondere nützlich zur Verwendung bei zellbiologischen und molekularbiologischen Arbeitsplätzen, in denen ein Benutzer Mikromanipulationswerkzeuge, wie z.B. einen Kapillarenhalter, schnell und genau in einer Zielposition anordnen muss bzw. schnell wieder aus dieser Zielposition entfernen muss. An solchen Arbeitsplätzen werden zum Beispiel Methoden wie die Intrazytoplasmatische Spermatozoeninjektion (ICSI) und der Transfer von embryonalen Stammzellen (ES-Zellen) in Blastozysten vorgenommen, bei denen die präzise Kontrolle der Position und Bewegung der verwendeten Bauteile einer Mikromanipulatoranordnung auf engstem Raum erforderlich ist.

In diesem Zusammenhang ist es besonders wünschenswert, eine effizient und komfortabel bedienbare Gelenkvorrichtung bereitzustellen, mit der sich das zu bewegende Bauteil, z.B. das Werkzeug einer Mikromanipulatoranordnung, insbesondere eine Kapillare oder eine Aktuatorspitze, präzise und schnell in eine Zielposition - bzw. aus dieser heraus - bringen lässt; in der Zielposition ist z.B. die Kapillarenspitze oder ein anders Werkzeug im Sichtfeld des Mikroskops bzw. der Kamera angeordnet. Zu den typischen Verfahrensbestandteilen bei der Durchführung von Zellmanipulationen gehört es, das Werkzeug, z.B. die Kapillare in einem Kapillarenhalter, während der Behandlung der Zelle kurzfristig aus der Zielposition herauszubewegen, um diese z.B. für andere Zwecke freizugeben (z.B. zum Wechsel eines Nährmediums für eine biologische Zelle, Zugabe von Wirkstoffen etc.), oder um das Werkzeug auszuwechseln. Danach soll das Werkzeug möglichst präzise wieder an die Zielposition zurückbewegt werden.

Oft weisen die Mikromanipulatoranordnungen für das manuelle Positionieren ein Schwenkgelenk auf, so dass durch ein Schwenken des Manipulatorarms in Richtung der Zellen eine Zielposition erreicht wird, die bereits relativ nahe an der Manipulationsposition liegt, in der die Zelle vom Werkzeug kontaktiert wird. Ein Beispiel für ein solches Schwenkgelenk ist das Klappgelenk des unter der Bezeichnung TransferMan® NK 2 (Bestellnummer 5 188 000.012) bei der Eppendorf AG, Deutschland, Hamburg, im Jahr 2012 kommerziell erhältlichen Mikromanipulators. Das Klappgelenk dient dazu, um den Werkzeughalter aus einer Zielposition, in der das Klappgelenk eingeklappt ist, in eine zum Werkzeugwechsel geeignete Position zu überführen, in der das Klappgelenk ausgeklappt ist. Bei allen bekannten Gelenkvorrichtungen besteht das Problem, dass die Zielposition der Gelenkvorrichtung, nach dem Verschwenken des Werkzeugs nicht mit der gewünschten Präzision wiederhergestellt werden kann. Bei den bekannten Gelenkvorrichtungen ist die Durchführung von zusätzlichen Justierungsschritten unumgänglich, um die Kapillarenspitze zusammen mit den Zellen wieder in einem Sichtfeld zu positionieren. Entsprechend hoch ist der Arbeitsaufwand, insbesondere, wenn ein Herausschwenken der Kapillarenspitze aus dem Sichtfeld des Mikroskops ein oft wiederkehrender Zwischenschritt ist.

Das Dokument DE 44 03 687 A1 offenbart eine Gelenkvorrichtung, bei der eine Zielposition durch das Anschlagen eines ersten und eines zweiten Teil und das gleichzeitige Anschlagen des zweiten und eines dritten Teils erreicht wird. Das Dokument NL 1 029 259 C2 offenbart eine Gelenkvorrichtung für eine Pendeltür, die ebenfalls aus drei Teilen besteht. Jedoch sind diese Gelenkvorrichtungen nicht für eine Mikromanipulatoranordnung geeignet.

Besonders wünschenswert ist es, dass die Zielposition so präzise getroffen wird, dass kein Nachstellen der Vergrößerungsstufe des Mikroskops erforderlich ist. Die Zielposition sollte vorzugsweise präzise genug sein, um die Werkzeugspitze zumindest in das Sichtfeld des Mikroskops zu bewegen. Dadurch können zeitaufwändige Justageschritte vermieden werden.

Es ist die Aufgabe der vorliegenden Erfindung, eine Gelenkvorrichtung bereitzustellen, mit der eine Zielposition präzise wiederholt einstellbar ist und eine komfortabel zu bedienende Mikromanipulatoranordnung mit dieser Gelenkvorrichtung bereitzustellen, sowie ein Verfahren zur deren Benutzung.

Die Erfindung löst diese Aufgabe durch die Gelenkvorrichtung gemäß Anspruch 1 und die Mikromanipulatoranordnung gemäß Anspruch 11 und das Verfahren zur Benutzung gemäß Anspruch 13. Bevorzugte Ausgestaltungen sind insbesondere Gegenstände der Unteransprüche.

Die Erfindung betrifft eine Gelenkvorrichtung für eine Mikromanipulatoranordnung insbesondere eine Drehgelenkvorrichtung bei einer Mikromanipulatoranordnung, zur Führung einer Relativbewegung von Bauteilen in eine Zielposition, insbesondere eine Arbeitsposition bei der Mikromanipulatoranordnung, mit zumindest einem ersten Teil, einem zweiten Teil und einem dritten Teil, wobei das erste Teil und das zweite Teil zur Durchführung einer ersten Relativbewegung miteinander beweglich verbunden sind, wobei das zweite Teil und das dritte Teil zur Durchführung einer zweiten Relativbewegung miteinander beweglich verbunden sind, mit zumindest einer ersten Anschlageinrichtung und einer zweiten Anschlageinrichtung, wobei mit der ersten Anschlageinrichtung die erste Relativbewegung in einer ersten Anschlagposition blockiert wird, in der das erste und zweite Teil in einer ersten Richtung aneinander anschlagen, wobei mit der zweiten Anschlageinrichtung die zweite Relativbewegung in einer zweiten Anschlagposition blockiert wird, in der das zweite und dritte Teil in einer zweiten Richtung aneinander anschlagen, mit zumindest einer ersten Fixiereinrichtung und einer zweiten Fixiereinrichtung, wobei das erste und zweite Teil mit der ersten Fixiereinrichtung in der ersten Anschlagposition gegen eine in negative erste Richtung gerichtete Ablösekraft solange gehalten werden, bis diese eine erste Fixierkraft übersteigt, wobei das zweite und dritte Teil mit der zweiten Fixiereinrichtung in der zweiten Anschlagposition gegen eine in negative zweite Richtung gerichtete Ablösekraft solange gehalten werden, bis diese eine zweite Fixierkraft übersteigt, und wobei eine kombinierte Anschlagposition als diese Zielposition einstellbar ist, in der die erste Anschlagposition und die zweite Anschlagposition beide vorliegen, und mit zumindest einer ersten Führungseinrichtung und einer zweiten Führungseinrichtung, wobei die erste Relativbewegung durch die erste Führungseinrichtung geführt wird und die zweite Relativbewegung durch die zweite Führungseinrichtung geführt wird, wobei die erste Relativbewegung entlang einer ersten Bewegungsbahn in eine positive oder negative erste Richtung verläuft, und wobei die zweite Relativbewegung entlang einer zweiten Bewegungsbahn in eine positive oder negative zweite Richtung verläuft, wobei insbesondere die erste und zweite Bewegungsbahn parallel sind.

Die Zielposition ist dadurch gekennzeichnet, dass die Gelenkvorrichtung so angeordnet ist, dass die erste Anschlagposition und die zweite Anschlagposition beide gleichzeitig vorliegen. Die Zielposition wird insbesondere eingestellt, indem der Benutzer der Gelenkvorrichtung das Anschlagen des ersten und zweiten Teils und das Anschlagen des dritten und zweiten Teils manuell bewirkt. Die Zielposition ist insbesondere konstruktiv vorgegeben und insbesondere nicht veränderlich, wodurch diese mit hoher Präzision immer wieder vom Benutzer angefahren werden kann, wenn das erste und/oder zweite Teil nicht in der ersten und/oder zweiten Anschlagposition angeordnet sind. Diese Zielposition kann insbesondere als eine Arbeitsposition genutzt werden, bei der ein zu manipulierendes Objekt mittels der sich an der Gelenkvorrichtung angebrachten Mikromanipulationswerkzeug bearbeitet, d. h. manipuliert wird.

Üblicherweise befindet sich das zu manipulierende künstliche oder biologische Objekt, insbesondere eine Zelle / ein Mikroorganismus oder Zellen / Mikroorganismen, in einem Kulturgefäß od. auf einem Deckgläschen, im Sichtfeld eines Mikroskops oder einer Kamera. Die erfindungsgemäße Gelenkvorrichtung mit angebrachtem Mikromanipulationswerkzeug ist vorzugsweise an dem Mikroskop, bzw. an dem Mikroskop mit Kamera so montiert, dass sich eine Mikromanipulatoranordnung ergibt. Bei dieser Mikromanipulatoranordnung befindet sich der für die Mikromanipulation ausgelegte Bereich des Mikromanipulationswerkzeugs ebenfalls (so wie das zu manipulierende Objekt) im Sichtfeld des Mikroskops bzw. der Kamera, d.h. in der durch die beiden Anschläge technisch vorgegebene Zielposition ist das Mikromanipulationswerkzeug auf die Arbeitsposition gerichtet.

Die erfindungsgemäße Gelenkvorrichtung ermöglicht Relativbewegungen des an dieser Gelenkvorrichtung angebrachten Mikromanipulationswerkzeugs, so dass das angebrachte Mikromanipulationswerkzeug verschiedene Relativpositionen einnehmen kann. So ist es möglich, dass sich das zu manipulierende Objekt gegenüber einem an der Gelenkvorrichtung angebrachten Mikromanipulationswerkzeug in einer für einen Werkzeugwechsel geeigneten Relativposition befindet. Dies ist für den Benutzer vorteilhaft um z.B. das an der Gelenkvorrichtung befestigte Mikromanipulationswerkzeug zu wechseln, da in dieser Relativposition seine den Wechsel ausführenden Hände sich nicht in der Nähe des zu manipulierende Objekts befinden und dieses nicht ungewollt berüht und damit verschoben werden kann; in einer weiteren vorteilhafte Relativposition ist das Mikromanipulationswerkzeug aus der Umgebung des Objektes so verschwenkt, dass das Objekt für übliche manuelle Behandlungsschritte (z.B. Medienwechsel, Justierung des Objektes, Hinzugabe von weiteren Zellen (inbesondere Eizelle od. Spermien) und / oder Auflage von Deckgläschen, etc.) für den Benutzer gefahrlos zugänglich ist. Gefahrlos bedeutet in diesem Zusammenhang, ohne das Risiko ein Mikromanipulationswerkzeug (z.B. eine spitze Kapillare aus Glas) ungewollt zu berühren. Bei einer ungewollten Berührung des Mikromanipulationswerkzeugs kann sich der Benutzer mit einer chemischen bzw. biologischen Substanz kontaminieren oder sich auch nur an den üblicherweise benutzten scharfkantigen Glaskapillaren schmerzhaft verletzen. Die erfindungsgemäße Gelenkvorrichtung reduziert dieses Risiko.

Zielpositionen werden bei bekannten Drehgelenkvorrichtungen oft durch herkömmliche Rasteinrichtungen definiert. Gefederte Raststifte gleiten beim Schwenken in einer z.B. horizontalen Schwenkebene mit ihrem Ende vertikal in eine abgerundete Vertiefung hinein und verrasten dort im Wesentlichen formschlüssig. Im Rahmen der vorliegenden Erfindung wurde festgestellt, dass bei herkömmlichen Rasteinrichtungen in der eingerasteten Zielposition eine minimale horizontale Beweglichkeit der zu arretierenden Bauteile in der Schwenkebene verbleibt, die durch eine zu hohe Nachgiebigkeit der Arretierung bedingt ist, d.h. die herkömmlich arretierten Bauteile bewegen sich schon unter geringen Beanspruchungen. Diese minimale Beweglichkeit ist für bestimmte Anwendungszwecke nicht optimal, z.B. bei Mikromanipulatoren, die insbesondere bei zellbiologischen und mikrobiologischen Arbeitsplätzen eingesetzt werden. Die minimale Beweglichkeit in Gelenknähe wird in Abhängigkeit von der Länge des Schwenkarms in einen größeren Positionierfehler übersetzt, der den Anforderungen an die Präzision nicht gerecht wird.

Bei der Gelenkvorrichtung gemäß der Erfindung wird eine Zielposition nicht durch eine herkömmliche Verrastung definiert, sondern durch die Anordnung gemäß Anspruch 1, die in der Wirkung einem Verrasten in Zielposition entspricht. Es werden zwei Anschlagseinrichtungen verwendet, die in Kombination das "Einrasten" einer herkömmlichen Rasteinrichtung nachahmen, aber eine wesentlich höhere Präzision bieten. Mittels eines Anschlags lässt sich eine Bewegung in Bewegungsrichtung präzise blockieren, um eine Zielposition präzise zu definieren. Die Erfindung setzt zwei Anschlagseinrichtungen ein, um das Verlassen der "verrasteten" Zielposition in zwei Richtungen wie bei einem Verrasten nachzubilden.

In einer ersten bevorzugten Ausführungsform der Erfindung ist die Gelenkvorrichtung eine Drehgelenkvorrichtung, und die erste und zweite Relativbewegung sind Rotationen um eine erste und zweite Rotationsachse A bzw. B, die parallel ineinander fallen können. Dann kann eine Rotation um die gemeinsame Rotationsachse A in positive Rotationsrichtung ω erfolgen, was auch als positiver Drehsinn bezeichnet wird. Entsprechend kann eine Rotation um die gemeinsame Rotationsachse A in negative Rotationsrichtung -ω erfolgen, was auch als negativer Drehsinn bezeichnet wird. Es ist aber auch möglich und bevorzugt, dass die erste und/oder zweite Relativbewegung entlang einer von einer Kreisbahn abweichenden Bewegungsbahn verlaufen. In einer zweiten bevorzugten Ausführungsform der Erfindung ist die Gelenkvorrichtung eine Schubgelenkvorrichtung, bei der die erste und zweite Relativbewegung Translationen entlang einer ersten und zweiten linearen Richtung A bzw. B, die parallel ineinander fallen können.

Vorzugsweise ist die erste Relativbewegung eine Rotation um eine erste Rotationsachse A und diese erste Richtung entspricht einer Rotation im positiven Drehsinn um die Rotationsachse A, und vorzugsweise ist dabei, oder unabhängig davon, die zweite Relativbewegung eine Rotation um eine zweite Rotationsachse B und diese zweite Richtung entspricht einer Rotation im positiven Drehsinn um die Rotationsachse B.

Das erste Teil ist vorzugsweise ein Bauteil, das einen Verbindungsabschnitt aufweist, mit dem das erste Bauteil beweglich, insbesondere rotierbar, mit dem zweiten Teil verbindbar ist. Ferner weist das erste Teil vorzugsweise einen Befestigungsabschnitt auf, über den ein externes Bauteil mit dem ersten Teil befestigbar ist. Das dritte Teil ist vorzugsweise ein Bauteil, das einen Verbindungsabschnitt aufweist, mit dem das dritte Bauteil beweglich, insbesondere rotierbar, mit dem zweiten Teil verbindbar ist. Ferner weist das dritte Teil vorzugsweise einen Befestigungsabschnitt auf, über den ein externes Bauteil mit dem dritten Teil befestigbar ist. Das externe Bauteil kann ein Bauteil einer Mikromanipulatoranordnung sein, insbesondere ein Schwenkarm, ein Motormodul, insbesondere der motorisiert und/oder manuell bewegliche Schlitten einer motorisierten oder manuellen Bewegungseinrichtung, ein Trägerbauteil einer Trägeranordnung, oder kann ein Teil einer weiteren Gelenkvorrichtung sein, insbesondere einer erfindungsgemäßen Gelenkvorrichtung. Der Verbindungsabschnitt kann den Aufnahmeabschnitt zur Aufnahme eines Achselements sein, das eine Rotationsachse definiert, um die das erste und das zweite Teil und/oder das dritte und das zweite Teil jeweils gegeneinander rotierbar sind. Der Verbindungsabschnitt kann ferner auch ein solches Achselement aufweisen.

Ein Achselement ist vorzugsweise fest mit dem zweiten Teil verbunden. Vorzugsweise weist das zweite Teil zwei Achselemente auf. Es ist auch möglich und bevorzugt, dass das erste Teil und/oder das dritte eine Achselement aufweisen, wobei dann vorzugsweise das zweite Teil mindestens einen, insbesondere zwei Aufnahmeabschnitt(e) zur Aufnahme eines Achselements aufweist. Ein Achselement ist dazu ausgebildet, eine Rotationsachse zu definieren, um die das erste Teil und das zweite Teil und/oder das dritte Teil und das zweite Teil gegeneinander rotieren können. Ein Achselement kann ein zylinderförmiges Bauteil aufweisen oder sein. Das Achselement kann insbesondere ein im Wesentlichen zylinderförmiges Stiftelement sein. Vorzugsweise ist das Achselement am zweiten Teil ein Doppelachselement. Dieses weist zwei Achselemente auf, die vorzugsweise parallel, insbesondere auf einer gemeinsamen Rotationsachse A angeordnet sind. Die beiden Achselemente sind durch einen Verbindungsabschnitt verbunden. Die Verbindung kann kraftschlüssig und/oder formschlüssig und/oder stoffschlüssig sein. Die beiden Achselemente können auch integral verbunden sein.

Die erste Führungseinrichtung weist vorzugsweise mindestens einen Führungsabschnitt auf, der vorzugsweise mit dem zweiten Teil verbunden ist, und/oder einen Führungsabschnitt, der mit dem ersten Teil verbunden ist. Die zweite Führungseinrichtung weist vorzugsweise mindestens einen Führungsabschnitt auf, der vorzugsweise mit dem zweiten Teil verbunden ist, und/oder einen Führungsabschnitt, der mit dem dritten Teil verbunden ist. Ein Führungsabschnitt kann ein separates Bauteil sein oder integral mit dem zweiten Teil und/oder dem ersten Teil und/oder dem dritten Teil ausgebildet sein. Ein Führungsabschnitt kann ein Achselement sein, das eine Rotationsachse definiert.

Vorzugsweise ist die erste und/oder zweite Führungseinrichtung, und insbesondere das Achselement, dazu ausgebildet, die relative Rotation des ersten und zweiten Teils, und/oder des dritten und zweiten Teils um einen Schwenkwinkel γ zu ermöglichen. Der Schwenkwinkel γ wird im Fall der relativen Rotation des ersten und zweiten Teils gemessen aus der ersten Anschlagposition heraus, in der γ=0, und wird im Fall der relativen Rotation des dritten und zweiten Teils gemessen aus der zweiten Anschlagposition heraus, in der γ=0. Die relative Rotation um den Winkel γ des ersten und zweiten Teils ist vorzugsweise möglich in einem Schwenkbereich mit 0 <= γ <= γ1, wobei γ1 vorzugsweise entnommen ist aus der Gruppe von jeweils bevorzugten Winkelwertbereichen {60° bis 90°; 90° bis 120°; 120° bis 180°; 180° bis 270°}, vorzugsweise mit positiver Schwenkrichtung ω. Die relative Rotation um den Winkel γ des dritten und zweiten Teils ist vorzugsweise möglich in einem Schwenkbereich mit 0 <= γ <= γ2, wobei γ2 vorzugsweise entnommen ist aus der Gruppe von jeweils bevorzugten Winkelwertbereichen {-60° bis -90°; -90° bis -120°;-120° bis -180°;-180° bis -270°}, also vorzugsweise in eine negative Schwenkrichtung -ω. Die Schwenkrichtungen des ersten und zweiten Teils und des dritten und zweiten Teils sind also insbesondere entgegengesetzt. Es ist auch möglich, dass γ1 negative Werte aufweist und γ2 positive Werte aufweist.

Der mögliche Schwenkbereich des ersten und zweiten Teils und der mögliche Schwenkbereich des dritten und zweiten Teils können gleich sein, also im Betrag können γ1 und γ2 gleich sein, oder können unterschiedlich sein. Die Zielposition ist dadurch definiert, dass der Winkel γ des ersten Teils und des zweiten Teils und der Winkel γ des dritten und zweiten Teils beide Null sind. Durch Werte des Schwenkwinkels ungleich Null werden Relativpositionen des ersten und zweiten Teils bzw. des dritten und zweiten Teils definiert, in denen z.B. bei einer Mikromanipulatoranordnung der Werkzeugwechsel durchgeführt - bezeichnet als Position zum Werkzeugwechsel - werden kann oder gefahrlos eine Objekthandhabung bzw. Probenbehandlung - bezeichnet als Position zur Objekthandhabung - durchgeführt werden kann. Eine solche Relativposition ist vorzugsweise durch eine Halteeinrichtung, insbesondere eine Reibungseinrichtung gehalten, was noch beschrieben wird.

Der maximale Schwenkwinkel, z.B. γ1, und/oder der minimale Schwenkwinkel, z.B. γ2, können durch eine dritte Anschlagposition und/oder eine vierte Anschlagposition definiert sein, die durch eine dritte Anschlageinrichtung des ersten und zweiten Teils bzw. eine vierte Anschlageinrichtung des dritten und zweiten Teils definiert sein können. Bei Verwendung der erfindungsgemäßen Gelenkvorrichtung in einer Mikromanipulatoranordnung an einem Mikroskop können die minimalen und/oder maximalen Schwenkwinkel durch physische Begrenzung beschränkt sein.

Eine Führungseinrichtung, insbesondere die erste und/oder zweite Führungseinrichtung, weist vorzugsweise jeweils eine Drehlagereinrichtung auf, vorzugsweise eine Gleitlagereinrichtung oder vorzugsweise eine Wälzlagereinrichtung, um zwei Teile, insbesondere das erste und das zweite Teil oder das zweite und das dritte Teil, beweglich aneinander zu lagern. Vorzugsweise weist die Wälzlagereinrichtung eine angestellte Wälzlagereinrichtung mit einem ersten und einem zweiten Wälzlager, die gegeneinander mittels einer Federeinrichtung verspannt sind. Durch diese angestellte Wälzlagereinrichtung wird eine hohe Präzision der Führung erreicht da die Walzelemente, insbesondere Kugeln, des Wälzlagers im Wesentlichen spielfrei gelagert sind. Dies hat sich insbesondere bei Verwendung der Gelenkvorrichtung bei einer Mikromanipulatoranordnung als vorteilhaft erwiesen, bei der es auf hohe Präzision ankommt. Die Federeinrichtung ist vorzugsweise eine Tellerfeder oder weist eine solche auf. Eine Tellerfeder bietet bei der erfindungsgemäßen Gelenkvorrichtung die gewünschten Spannkräfte zur relativen Fixierung des ersten und zweiten Wälzlagers, wodurch eine hohe Präzision der Führung erreicht wird. Ferner erlaubt die Tellerfeder eine kompakte Konstruktion der Gelenkvorrichtung, was insbesondere bei Mikromanipulatoranordnungen mit beschränktem Bauraum vorteilhaft ist.

Vorzugsweise weist die erste Fixiereinrichtung und/oder die zweite Fixiereinrichtung jeweils mindestens ein Magnetelement und insbesondere ein zu diesem komplementäres magnetisches Element zur Ausbildung der magnetischen Anziehungskraft auf, insbesondere mittels Ferromagnetismus. Eine Fixiereinrichtung kann mehrere Magnetelemente aufweisen, die die gewünschte Fixierkraft erzeugen, insbesondere 2, 3, 4, 5, 6 Magnetelemente oder eine andere Anzahl. Durch eine solche Gestaltung kann die Anschlagposition präzise eingestellt und mit genau definierten Fixierkräften wieder gelöst werden.

Das magnetische Element kann ein integraler Bestandteil des ersten und/oder des zweiten und/oder des dritten Teils sein. Ein Magnetelement ist vorzugsweise ein Permanentmagnet oder weist einen solchen auf. Vorzugsweise weist der Magnet ein Abdeckelement auf, um ihn vor mechanischen Schäden zu schützen, wenn er durch das Anschlagen in dieser ersten und/oder zweiten Anschlagposition belastet wird. Vorzugsweise ist der Permanentmagnet aus einer Samarium-Cobalt-Legierung hergestellt oder weist diese Materialien auf. Diese Materialien haben sich in feuchten bzw. in mit Chemikalien behafteten Laborumgebungen als besonderes widerstandsfähig gegen Korrosion erwiesen. Es ist aber auch möglich, andere Permanentmagneten zu verwenden.

Das Magnetelement kann auch eine Elektromagnet sein oder einen solchen aufweisen.

Falls die Gelenkvorrichtung eine Drehgelenkvorrichtung ist oder rotierbare Elemente aufweist, kann die erste Fixierkraft ein erstes Fixierdrehmoment sein und kann die zweite Fixierkraft ein zweites Fixierdrehmoment sein.

Die erste Fixiereinrichtung und/oder die zweite Fixiereinrichtung kann ferner eine Verbindungseinrichtung zur kraftschlüssigen (englisch: "force-fit") und/oder formschlüssigen (englisch: "form-fit") Verbindung des ersten Teils mit dem zweiten Teil in der ersten Anschlagposition aufweisen, bzw. eine Verbindungseinrichtung zur kraftschlüssigen und/oder formschlüssigen Verbindung des zweiten Teils mit dem dritten Teil in der zweiten Anschlagposition aufweisen, um die Teile in Anschlagposition lösbar zu fixieren. Die Verbindungseinrichtung kann z.B. eine gefederte Rastverbindung aufweisen.

Vorzugsweise weist Gelenkvorrichtung eine erste Halteeinrichtung auf, die dazu ausgebildet ist, der ersten Relativbewegung einen Widerstand entgegenzusetzen, zu dessen Überwindung zumindest eine erste Losbrechkraft erforderlich ist und vorzugsweise weist Gelenkvorrichtung eine zweite Halteeinrichtung auf, die dazu ausgebildet ist, der ersten Relativbewegung einen Widerstand entgegenzusetzen, zu dessen Überwindung zumindest eine zweite Losbrechkraft erforderlich ist. Mit einer solchen Halteeinrichtung können verschiedene Relativpositionen zweier Teile, insbesondere des ersten und zweiten Teils bzw. des zweiten und dritten Teils vorübergehend so eingestellt werden, dass insbesondere ein versehentliches Verstellen durch geringe einwirkende Kräfte und Vibrationen nicht zu einer Änderung der eingestellten Relativposition führen. Dadurch wird die Arbeit mit der Gelenkvorrichtung komfortabler und sicherer.

Vorzugsweise weist die erste Halteeinrichtung einer erste Reibungseinrichtung auf, die während der ersten Relativbewegung eine erste Gleitreibung und in unbewegten Relativpositionen des ersten und zweiten Teils eine erste Haftreibung bewirkt, zu deren Überwindung zumindest diese erste Losbrechkraft erforderlich ist und vorzugsweise weist die zweite Halteeinrichtung einer zweite Reibungseinrichtung auf, die während der zweiten Relativbewegung eine zweite Gleitreibung und in unbewegten Relativpositionen des ersten und zweiten Teils eine zweite Haftreibung bewirkt, zu deren Überwindung zumindest diese zweite Losbrechkraft erforderlich ist. Eine Reibungseinrichtung kann ein Hilfselement aufweisen, was die Reibung bewirkt, oder kann ohne ein Hilfselement auskommen, z.B. durch entsprechende Fertigung zweier reibenden Teile mit einer Press-/Übergangspassung oder einer sehr geringen Spielpassung ihrer Führungseinrichtung, die dann insbesondere die Reibungseinrichtung bildet.

Falls die Gelenkvorrichtung eine Drehgelenkvorrichtung ist oder rotierbare Elemente aufweist, kann die erste Losbrechkraft ein erstes Losbrechdrehmoment sein und kann die zweite Losbrechkraft ein zweites Losbrechdrehmoment sein.

Vorzugsweise sind die erste und die zweite Fixierkraft jeweils größer als diese erste und/oder zweite Losbrechkraft. Dadurch können das erste und das zweite Teil aus einer durch die erste Halteeinrichtung gehaltenen Relativposition gelöst werden, ohne dass sich die durch die zweite Fixiereinrichtung gehaltene zweite Anschlagposition löst. Ferner können dadurch das zweite und das dritte Teil aus einer durch die zweite Halteeinrichtung gehaltenen Relativposition gelöst werden, ohne dass sich die durch die erste Fixiereinrichtung gehaltene erste Anschlagposition löst. Die erste und zweite Fixierkraft können gleich groß sein oder voneinander abweichen.

Vorzugsweise weist die erste und/oder die zweite Reibungseinrichtung ein Hilfselement auf, um die Reibung zu vermitteln oder zu erzeugen. Das Hilfselement kann ein Federelement sein oder aufweisen, dass eine Normalkraft zwischen den zueinander bewegten Flächen der Teile bewirkt, zwischen denen die Reibung auftritt, um durch eine erhöhte Normalkraft die Reibung zu erhöhen. Das Hilfselement kann elastisch verformbar sein und kann zwischen den relativ zueinander bewegten Teilen, insbesondere zwischen dem ersten und zweiten Teil und/oder dem zweiten und dritten Teil angeordnet sein. Das Hilfselement kann ein elastisch verformbares Material aufweisen, z.B. Gummi oder ein anderes Elastomer. Vorzugsweise weist das Hilfselement einen Schmierfilm aus einem fluiden Schmiermittel auf, insbesondere ein Silikonfett, um den Abrieb des Hilfselements durch die Reibung zu vermindern und die Reibkraft einzustellen.

Vorzugsweise weist die erste Reibungseinrichtung als Hilfselement einen elastisch verformbaren Ring auf, der konzentrisch zu einer ersten Rotationsachse A angeordnet ist und der zum Bewirken der ersten Gleitreibung und ersten Haftreibung zwischen dem ersten Teil und dem zweiten Teil eingespannt ist, und vorzugsweise weist die zweite Reibungseinrichtung als Hilfselement einen elastisch verformbaren Ring aufweist, der konzentrisch zu einer zweiten Rotationsachse B angeordnet ist und der zum Bewirken der zweiten Gleitreibung und zweiten Haftreibung zwischen dem zweiten Teil und dem dritten Teil eingespannt ist. Durch einen Ring kann bei Rotation eine besonders gleichmäßige Reibung bewirkt werden. Vorzugsweise ist der Ring konzentrisch um ein zylinderförmiges Achselement der Führungseinrichtung angeordnet, wobei das Achselement ein Bestandteil des zweiten Teils sein kann. Vorzugsweise ist der Ring so um das Achselement angeordnet, dass er unter Zugspannung steht.

Die Reibungseinrichtung kann ein Schmiermittel, z.B. ein Mineralöl oder ein Silikonöl aufweisen, durch dessen Verwendung die gewünschte Reibung erzielt wird und der Abrieb reduziert oder verhindert wird. Das Schmiermittel kann zwischen dem Hilfselement, insbesondere Ring, und einem Achselement vorgesehen sein, wobei das Achselement am ersten, zweiten und/oder dritten Teil angeordnet sein kann. Das Schmiermittel kann aber auch zwischen dem Ring und dem ersten und/oder dritten Teil vorgesehen sein.

Vorzugsweise ist zwischen dem ersten Teil und dem zweiten Teil eine kreisringförmige Aussparung vorgesehen, in der der Ring so anordenbar ist, dass er zwischen dem ersten Teil und dem zweiten Teil unter Druck eingespannt wird und so die Reibung vermittelt. Vorzugsweise ist zwischen dem zweiten Teil und dem dritten Teil eine kreisringförmige Aussparung vorgesehen, in der der Ring so anordenbar ist, dass er zwischen dem zweiten Teil und dem dritten Teil unter Druck eingespannt wird und so die Reibung vermittelt. Vorzugsweise weist die kreisringförmige Aussparung eine zum Gleiten ausgebildete Innenfläche auf. Das hat den Vorteil, dass der durch Reibung bewirkte Abrieb des Rings reduziert wird und der Ring seltener ausgetauscht werden muss.

Vorzugsweise weist das erste und das dritte Teil jeweils eine Befestigungseinrichtung zur Befestigung eines weiteren Bauteils auf, insbesondere durch eine Nut-/ Feder-Verbindung. Dazu kann die Befestigungseinrichtung eine Nut vorsehen, die am ersten und/oder dritten Teil angebracht oder integral ausgebildet ist, oder eine Feder vorsehen, die am ersten und/oder dritten Teil angebracht oder integral ausgebildet ist. Die Nut kann insbesondere T-förmig sein. Die Feder kann insbesondere ein T-förmig ausgebildetes Nutensteinelement aufweisen, das insbesondere beweglich am ersten und/oder dritten Teil angebracht sein kann.

Vorzugsweise weist die Gelenkvorrichtung mindestens ein viertes Teil auf, wobei das dritte und das vierte Teil zur Durchführung einer dritten Relativbewegung beweglich miteinander verbunden sind, insbesondere mittels einer dritten Führungseinrichtung, mit einer dritten Anschlageinrichtung, mit der die dritte Relativbewegung in einer dritten Anschlagposition blockiert wird, in der das dritte und vierte Teil in einer dritten Richtung aneinander anschlagen, und mit einer dritten Fixiereinrichtung, mit der das dritte und vierte Teil in der dritten Anschlagposition gegen eine in negative dritte Richtung gerichtete Ablösekraft solange gehalten werden, bis diese eine dritte Fixierkraft übersteigt, und wobei eine zweite kombinierte Anschlagposition als zweite Zielposition einstellbar ist, in der die zweite Anschlagposition und die dritte Anschlagposition beide vorliegen. In dieser Weise können mehr als eine Zielposition an der Gelenkvorrichtung definiert werden.

Vorzugsweise ist die erste und zweite Relativbewegung eine in Grad messbare Rotation. Dann ist die Präzision q der Einstellung der kombinierten Anschlagposition vorzugsweise bei q<= (+-) 5* 10^-1 Grad, vorzugsweise bei q <= (+-) 10^-2 Grad, vorzugsweise q<= (+- ) 5 * 10^-3 Grad, vorzugsweise q<= (+-) 10^-3 Grad, vorzugsweise q<= (+-) 10^-4 Grad. Der Begriff "Präzision" bedeutet in diesem Zusammenhang, das die relative Positionierung des ersten Teils und das dritten Teils in der kombinierten Anschlagposition, nämlich der "Zielposition" Z, wiederholbar im Bereich Z +- q einstellbar ist. Dasselbe gilt vorzugsweise für die Präzision der ersten Anschlagposition P1 +- q und/oder der zweiten Anschlagposition P2 +- q.

Die "Präzision" der Einstellung der ersten Anschlagposition ist im Rahmen der vorliegenden Erfindung durch folgendes Messverfahren bestimmbar: es werden N=10 mal folgende beiden Experimente durchgeführt: im ersten Experiment werden das erste Teil und das zweite Teil aus der Anschlagposition in positive Schwenkrichtung ω um den maximalen Schwenkwinkel γ ausgelenkt. Aus dieser Relativposition werden das erste und zweite Teil wieder in die Anschlagposition gebracht. Die gemessene Winkelabweichung ζ1 der ersten Anschlagposition wird notiert. Auf diese Weise werden zehn erste Werte ζ1 bestimmt. Im zweiten Experiment werden das erste Teil und das zweite Teil aus der Anschlagposition in negative Schwenkrichtung -ω um den (betragsmäßig) maximalen - bzw. minimalen- Schwenkwinkel -γ ausgelenkt. Aus dieser Relativposition werden das erste und zweite Teil wieder in die Anschlagposition gebracht. Die gemessene Winkelabweichung ζ2 der ersten Anschlagposition wird notiert. Auf diese Weise werden zehn zweite Werte ζ2 bestimmt. Die Präzision q1 entspricht dem betragsmäßig größten Wert der so bestimmten zwanzig Werte ζ1, ζ2. Analog wird die Präzision q2 der zweiten Anschlagposition bestimmt. Als Präzision der kombinierten Anschlagposition, also der Zielposition, kann die Summe der beiden Werte der Präzision q1 für die erste Anschlagposition und q2 für die zweite Anschlagposition verwendet werden.

Vorzugsweise sind das erste Teil und das dritte Teil bau-identische Bauteile. Sie können mit unterschiedlicher Händigkeit am zweiten Teil angeordnet sein. Dadurch ist die Herstellung der Gelenkvorrichtung vereinfacht, einerseits für den Hersteller, andererseits für den Benutzer, der die Gelenkvorrichtung in der gewünschten Weise zusammensetzen kann. Es ist auch möglich und bevorzugt, dass das erste und das zweite Bauteil spiegelsymmetrisch geformte Bauteile sind.

Vorzugsweise weist die Gelenkvorrichtung mindestens ein erstes Befestigungsmittel auf, insbesondere ein Befestigungselement für eine kraftschlüssige (englisch: "force-fit") und/oder formschlüssige (englisch: "form-fit") Verbindung, z.B. eine Schraubverbindung, z.B. eine lösbare Schraube, oder ein Riegelelement, um das erst und das zweite Teil lösbar aneinander zu befestigen.

Die Erfindung betrifft auch eine Mikromanipulatoranordnung, die die erfindungsgemäße Gelenkvorrichtung aufweist. Vorzugsweise weist die Mikromanipulatoranordnung ein erstes Bauteil auf, insbesondere ein erstes Armelement auf, das dieses erste Teil der Gelenkvorrichtung ist oder mit dem das erste Teil der Gelenkvorrichtung verbunden ist. Vorzugsweise weist die Mikromanipulatoranordnung ein zweites Bauteil auf, insbesondere ein zweites Armelement auf, das dieses dritte Teil der Gelenkvorrichtung ist oder mit dem das dritte Teil der Gelenkvorrichtung verbunden ist. Das erste und das zweite Bauteil können jeweils der Schlitten einer Motoreinrichtung sein oder mit diesem verbunden sein. Ein solcher Schlitten ist durch die motorisierte Bewegungseinrichtung der Mikromanipulatoranordnung motorisiert bewegbar, insbesondere einen Linearmotor der Bewegungseinrichtung.

Bei der erfindungsgemäßen Mikromanipulatoranordnung wird eine erfindungsgemäße Gelenkvorrichtung dazu verwendet, um ein erstes Bauteil, zum Beispiel einen Werkzeughalter mit Werkzeug, z.B. schwenkbar, beweglich an ein zweites Bauteil zu koppeln, zum Beispiel an den Schlitten einer motorisierten Bewegungseinrichtung. Eine Mikromanipulation mit dieser Mikromanipulatoranordnung kann die Manipulation künstlicher Objekte vorsehen, wie z.B. Mikrosysteme oder Nanosysteme und deren Komponenten. Sie kann insbesondere die Manipulation biologischer Objekte, wie z.B. lebender Zellen oder Mikroorganismen betreffen. Beide Einsatzbereiche erfordern eine hohe Zuverlässigkeit und Präzision bei der Anordnung der Manipulationswerkzeuge, z.B. Kapillaren, Sonden oder Elektroden, in einer gewünschten Arbeitposition, in der ein oft mikroskopisch kleines Objekt mechanisch manipuliert wird. Dafür ist die erfindungsgemäße Gelenkvorrichtung besonders geeignet.

Ein Manipulationswerkzeug, auch als Werkzeug bezeichnet, kann eine Kapillare oder eine Aktuatorspitze sein, oder ein Schneid- oder Stechwerkzeug, das zur Mikromanipulation geeignet ist, oder eine Mikroelektrode. Das Werkzeug kann auch den Werkzeughalter bezeichnen, der z.B. die Kapillare oder das Schneid- oder Stechwerkzeug trägt. Der Werkzeughalter kann insbesondere auch ein elektrisch betätigbarer Aktuator sein, der z.B. piezoelektrisch angetrieben sein kann. Zu den typischen Verfahrensbestandteilen bei der Durchführung von Zellmanipulationen gehört es, das Werkzeug, z.B. die Kapillare in einem Kapillarenhalter, während der Behandlung der Zelle kurzfristig aus der Zielposition herauszubewegen, um diese z.B. für andere Zwecke freizugeben (z.B. Medien), oder um das Werkzeug auszuwechseln. Danach soll das Werkzeug möglichst präzise wieder an die Zielposition zurückbewegt werden. Dazu dient in besonders geeigneter Weise die erfindungsgemäße Gelenkvorrichtung der erfindungsgemäßen Mikromanipulatoranordnung.

Das erste und/oder das zweite Bauteil können insbesondere jeweils sein: der Schwenkarm eines Mikromanipulators, oder der Werkzeughalter mit oder ohne Werkzeug, der Schlitten bzw. das motorisiert bewegte Element einer motorisierten Bewegungseinrichtung, ein Bestandteil einer Halteeinrichtung, eines Stativs, ein Bestandteil eines Mikroskops.

Als Erfindung angesehen wird ferner die Verwendung der erfindungsgemäßen Gelenkvorrichtung an einem biologischen, medizinischen, zellbiologischen oder mikrobiologischen Arbeitsplatz, insbesondere bei der Manipulation von lebenden Zellen, insbesondere in einem mikrobiologischen, zellbiologischen oder medizinischen Labor. Zur Erfindung gehört ferner ein Verfahren zur Benutzung der erfindungsgemäßen Gelenkvorrichtung, insbesondere bei einem Verfahren zur Mikromanipulation eines Objektes, insbesondere eines künstlichen oder biologischen Objektes, insbesondere einer lebenden Zelle oder eines Mikroorganismus. Vorzugsweise weist das Verfahren zur Benutzung der erfindungsgemäßen Gelenkvorrichtung wenigstens einen der folgenden Schritte auf:
(a) Befestigen der Gelenkvorrichtung an einem externen Bauteil eB1, insbesondere durch Verbinden des ersten Teils oder des dritten Teils mit dem externen Bauteil eB1, insbesondere einem externen Bauteil eB1 einer erfindungsgemäßen Mikromanipulatoranordnung, wobei das externe Bauteil eB1 insbesondere eine Trägereinrichtung für diese Gelenkvorrichtung ist, und/oder ein bewegliches Element ist, insbesondere ein Schlitten, einer motorisierten Trägereinrichtung ist;
(b) Befestigung eines externen Bauteils eB2 an der Gelenkvorrichtung, insbesondere durch Verbinden des externen Bauteils eB2 mit dem ersten Teil oder dem dritten Teil der Gelenkvorrichtung, wobei das externe Bauteil eB2 mittelbar -z.B. über mindestens ein Verbindungselement - oder unmittelbar mit der Gelenkvorrichtung verbunden sein kann, wobei das externe Bauteil eB2 insbesondere ein Werkzeughalters für ein Mikromanipulationswerkzeug sein kann, das insbesondere eine Kapillare oder ein Mikrodissektionswerkzeug sein kann;
(c) Positionieren des Objektes in einem Abstand zu einer erfindungsgemäßen Gelenkvorrichtung, insbesondere einer erfindungsgemäßen Mikromanipulationsvorrichtung;
(d) Einstellen der Zielposition dieser Gelenkvorrichtung als eine Arbeitsposition, in der insbesondere ein mit der Gelenkvorrichtung verbundenes Mikromanipulationswerkzeug, insbesondere eine Kapillare oder ein Mikrodissektionswerkzeug, den gewünschten Arbeitsabstand zum Objekt aufweist;
(e) Ausgehend von der ersten Anschlagposition, insbesondere ausgehend von der Zielposition: Durchführung einer ersten Relativbewegung, insbesondere einer Rotation in eine Rotationsrichtung ω, zwischen dem ersten Teil und dem zweiten Teil dieser Gelenkvorrichtung, bis das erste Teil und das zweite Teil in einer ersten Relativposition angeordnet sind;
(f) Ausgehend von der zweiten Anschlagposition, insbesondere ausgehend von der Zielposition: Durchführung einer zweiten Relativbewegung, insbesondere einer Rotation in eine entgegengesetzte Rotationsrichtung -ω, zwischen dem dritten Teil und dem zweiten Teil dieser Gelenkvorrichtung, bis das dritte Teil und das zweite Teil in einer zweiten Relativposition angeordnet sind;
(g) Ausgehend von der in Schritt (e) beschriebenen ersten Relativposition oder der in Schritt (f) beschriebenen zweiten Relativposition: Durchführung einer manuellen Behandlung des ersten Teils und/oder des dritten Teils, insbesondere Entfernen und/oder Ablösen eines mit dem ersten oder dritten Teils verbundenen Mikromanipulationswerkzeugs (Werkzeugwechsel); diese Relativposition wird als Position zum Werkzeugwechsel bezeichnet.
(h) Ausgehend von der in Schritt (e) beschriebenen ersten Relativposition oder der in Schritt (f) beschriebenen zweiten Relativposition: Durchführung einer Behandlung des zu manipulierenden Objektes, insbesondere Entfernen oder Hinzufügen von Medium (Kulturmedium, Nährmedium oder IVF-Medium) Puffer, einer Lösung oder Öl, Entfernen des Objektes und/oder Hinzufügen eines weiteren Objektes (z.B. weitere Zellen, z.B. Eizelle ist erstes Objekt, dann Zugabe von Spermien als zweites Objekt od. umgekehrt) (Objekthandhabung); diese Relativposition wird als Position zur Objekthandhabung bezeichnet.
(i) Ausgehend von der in Schritt (e) beschriebenen ersten Relativposition und/oder der in Schritt (f) beschriebenen zweiten Relativposition: Repositionierung der Gelenkvorrichtung in die Zielposition (Arbeitsposition) durch manuelles Zurückschwenken aus der ersten und/oder zweiten Relativposition.

Weitere bevorzugte Ausgestaltungen der erfindungsgemäßen Gelenkvorrichtung ergeben sich aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Es zeigen:

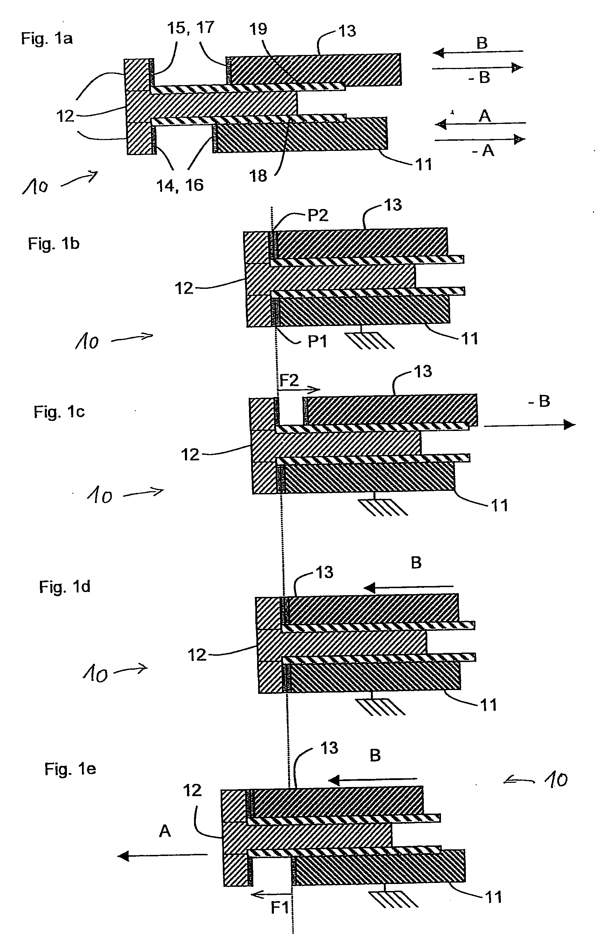

Fig. 1a zeigt die erfindungsgemäße Gelenkvorrichtung gemäß einem bevorzugten Ausführungsbeispiel der Erfindung.
Fig. 1b bis Fig. 1e zeigen einen möglichen Bewegungsablauf bei der Gelenkvorrichtung aus Fig. 1 a entlang der Bewegungsrichtungen A bzw. B.
Fig. 1b zeigt die Gelenkvorrichtung aus Fig. 1 a in der die Zielposition bildenden kombinierten Anschlagposition, in der die erste Anschlagposition des ersten und zweiten Teils und die zweite Anschlagposition des zweiten und dritten Teils vorliegen.
Fig. 1c zeigt die Gelenkvorrichtung aus Fig. 1 a in der ersten Anschlagposition des ersten und zweiten Teils und in einer Relativposition des zweiten und dritten Teils.
Fig. 1d zeigt die Gelenkvorrichtung aus Fig. 1 a wieder in der die Zielposition bildenden kombinierten Anschlagposition
Fig. 1e zeigt die Gelenkvorrichtung aus Fig. 1a in der zweiten Anschlagposition des zweiten und dritten Teils und in einer Relativposition des ersten und zweiten Teils.
Fig. 2a ist eine perspektivische Vorderansicht einer erfindungsgemäßen Drehgelenkvorrichtung gemäß einer bevorzugten Ausführungsform.
Fig. 2b ist eine perspektivische Rückansicht der Drehgelenkvorrichtung aus Fig. 2a.
Fig. 2c ist eine perspektivische Explosionsdarstellung der Drehgelenkvorrichtung aus Fig. 2a.
Fig. 3a und b zeigen die Drehgelenkvorrichtung der Fig. 2a in der Zielposition, in perspektivischer Seitenansicht (Fig. 3a) und Untenansicht (Fig. 3b), analog der Zielposition der Gelenkvorrichtung in Fig. 1a, 1d.
Fig. 3c, und d zeigen die Drehgelenkvorrichtung der Fig. 2a in einer Position analog den Position der Gelenkvorrichtung in Fig. 1 e.
Fig. 3e, und f zeigen die Drehgelenkvorrichtung der Fig. 2a in einer Position analog den Position der Gelenkvorrichtung in Fig. 1 c.
Fig. 4 zeigt einen Arbeitsplatz, an dem die erfindungsgemäße Verbindungsvorrichtung in bevorzugter Weise verwendet wird.
Fig. 5 zeigt ein Ausführungsbeispiel einer Mikromanipulatoranordnung gemäß der Erfindung, die eine erfindungsgemäße Gelenkvorrichtung aufweist, insbesondere jene des Ausführungsbeispiels der Fig. 1a, 1b, 2a bis 2c und 3a bis 3f.

Fig. 1a zeigt die erfindungsgemäße Gelenkvorrichtung 10 gemäß einem bevorzugten Ausführungsbeispiel der Erfindung. Sie kann bei einer Mikromanipulatoranordnung eingesetzt werden zur Führung einer Relativbewegung von Bauteilen in eine Zielposition. Die Gelenkvorrichtung 10 ist aufgebaut mit einem ersten Teil 11, einem zweiten Teil 12 und einem dritten Teil 13, wobei das erste Teil 11 und das zweite Teil 12 zur Durchführung einer ersten Relativbewegung A miteinander beweglich verbunden sind, wobei das zweite Teil 12 und das dritte Teil 13 zur Durchführung einer zweiten Relativbewegung B miteinander beweglich verbunden sind, mit zumindest einer ersten Anschlageinrichtung 14 und einer zweiten Anschlageinrichtung 15, wobei mit der ersten Anschlageinrichtung 14 die erste Relativbewegung A in einer ersten Anschlagposition P1 blockiert wird, in der das erste 11 und zweite Teil 12 in einer ersten Richtung aneinander anschlagen, wobei mit der zweiten Anschlageinrichtung 15 die zweite Relativbewegung B in einer zweiten Anschlagposition P2 blockiert wird, in der das zweite 12 und dritte Teil 13 in einer zweiten Richtung B aneinander anschlagen, mit zumindest einer ersten Fixiereinrichtung 16 und einer zweiten Fixiereinrichtung 17, wobei das erste 11 und zweite Teil 12 mit der ersten Fixiereinrichtung 16 in der ersten Anschlagposition P1 gegen eine in negative erste Richtung gerichtete Ablösekraft solange gehalten werden, bis diese eine erste Fixierkraft F1 übersteigt, wobei das zweite 12 und dritte Teil 13 mit der zweiten Fixiereinrichtung 17 in der zweiten Anschlagposition P2 gegen eine in negative zweite Richtung gerichtete Ablösekraft solange gehalten werden, bis diese eine zweite Fixierkraft F2 übersteigt, und wobei eine kombinierte Anschlagposition als diese Zielposition einstellbar ist, in der die erste Anschlagposition und die zweite Anschlagposition beide vorliegen.

Die erste Anschlageinrichtung 14 bildet hier auch die erste Fixiereinrichtung 16, z.B. mittels eines Permanentmagneten, und die zweite Anschlageinrichtung 15 bildet hier auch die erste Fixiereinrichtung 17. Eine erste Führungseinrichtung 18 dient hier zur Führung der ersten Relativbewegung A und eine zweite Führungseinrichtung 19 dient hier zur Führung der zweiten Relativbewegung B. A bezeichnet hier eine erste Bewegungsrichtung des zweiten Teils mit Bezug auf das erste Teil, B bezeichnet hier eine zweite Bewegungsrichtung des dritten Teils mit Bezug auf das zweite Teil. Die dazu entgegen gesetzten Richtungen tragen das negative Vorzeichen. Die Bewegungsrichtungen A und B sind schematisch zu verstehen, können aber, der Darstellung in den Figuren entsprechend, eine lineare Bewegung parallel derselben linearen Bewegungsrichtung A=B sein. Bei einer Rotationsbewegung würden die Richtungen A und B jeweils einem positiven Drehsinn entsprechen, bzw. bei negativem Vorzeichen einem negativen Drehsinn.

Fig. 1b bis Fig. 1e zeigen einen möglichen Bewegungsablauf bei der Gelenkvorrichtung aus Fig. 1a entlang der Bewegungsrichtungen A bzw. B. Das erste Teil 11 der Gelenkvorrichtung wird als fester Bezugspunkt angenommen, in Bezug auf das die Bewegung A des zweiten Teils 12 erfolgt.

Fig. 1b zeigt die Gelenkvorrichtung 10 in der die Zielposition bildenden kombinierten Anschlagposition, in der die erste Anschlagposition P1 des ersten und zweiten Teils und die zweite Anschlagposition P2 des zweiten und dritten Teils vorliegen.

Fig. 1c zeigt die Gelenkvorrichtung aus Fig. 1 a in der ersten Anschlagposition des ersten und zweiten Teils. Das zweite 12 und dritte Teil 13 wurden durch Überwindung einer zweiten Fixierkraft F2 voneinander gelöst und in eine Relativposition überführt.

Fig. 1d zeigt die Gelenkvorrichtung aus Fig. 1 a wieder in der die Zielposition bildenden kombinierten Anschlagposition

Fig. 1e zeigt die Gelenkvorrichtung aus Fig. 1 a in der zweiten Anschlagposition des zweiten 12 und dritten Teils 13 und in einer Relativposition des ersten und zweiten Teils, die durch Bewegung A des zweiten Teils 12 gegenüber dem ersten Teil 11 unter Überwindung der ersten Fixierkraft F1 erreicht wurde. Die manuelle bewirkte Kraft wurde durch eine Kraftübertragung über das dritte Teil 13 auf das zweite Teil 12 und vom zweiten Teil 12 auf das erste Teil 11 übertragen.

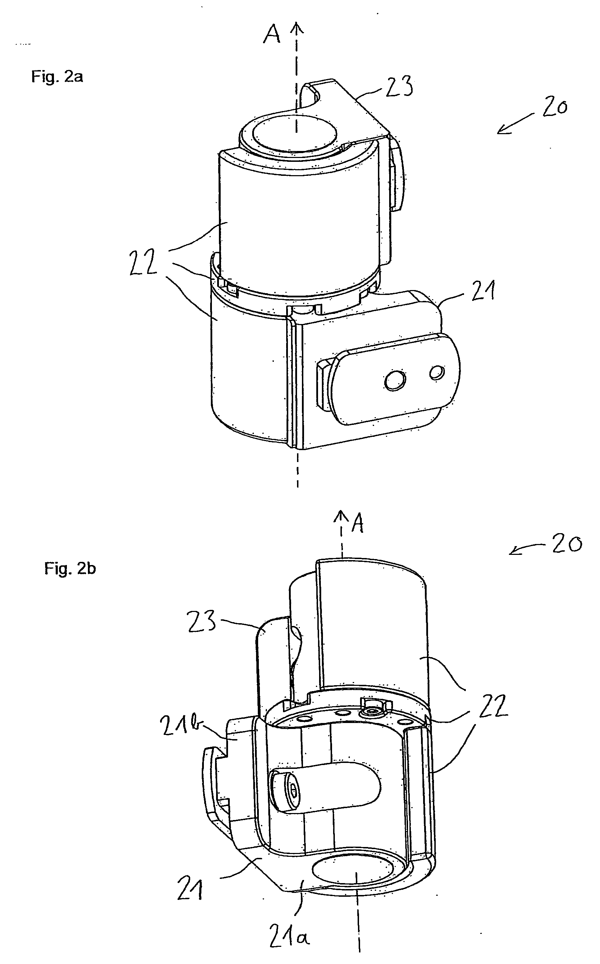

Fig. 2a ist eine perspektivische Vorderansicht einer erfindungsgemäßen Drehgelenkvorrichtung 20 gemäß einer bevorzugten Ausführungsform, Fig. 2b zeigt deren Rückansicht. Die Drehgelenkvorrichtung weist das erste Teil 21, das zweite Teil 22 und das dritte Teil 23 auf, die jeweils um die Rotationsachse A rotiert werden können, bis sie in Anschlagsbereichen aneinander anschlagen.

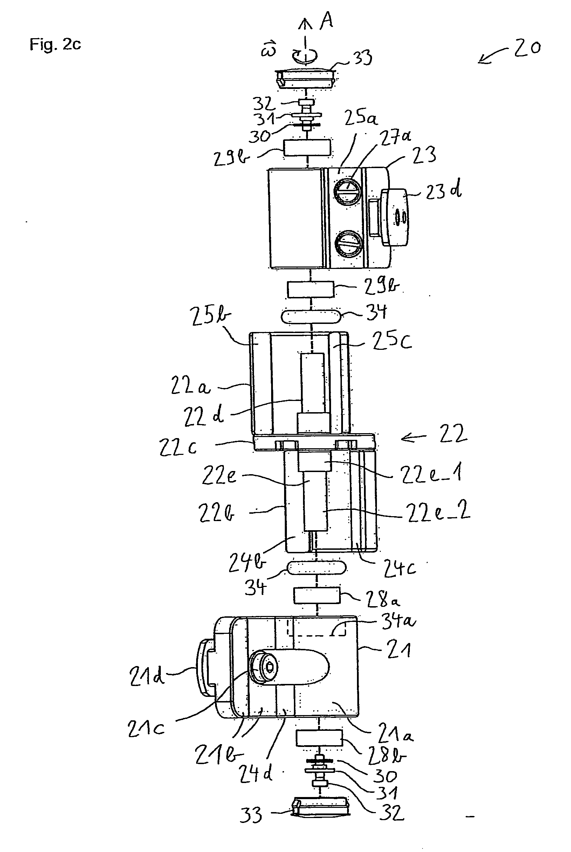

Fig. 2c zeigt den Aufbau der Drehgelenkvorrichtung 20 in einer Explosionsansicht. Das erste Teil 21 und das dritte Teil 23 sind identisch konstruiert, was die Herstellung der Drehgelenkvorrichtung und deren Zusammenbau vereinfacht. Die nachfolgenden Erläuterungen zum Aufbau des ersten Teils 21 gelten deshalb analog für das dritte Teil 23, und umgekehrt.

Beim Zusammenbau werden das erste Teil 21 auf das Achselement 22e des zweiten Teils 22 und das dritte Teil auf das Achselement 22d des zweiten Teils 22 aufgesteckt. Das zweite Teil weist vorzugsweise eine scheibenförmige, vorliegend aus Stahl gefertigte Montageplatte 22c auf. Diese ist mit den beiden Achselementen 22d und 22e fest verbunden. Die beiden Achselemente 22d und 22e liegen parallel zueinander und konzentrisch zur gemeinsamen Rotationsachse A. Auf der einen Seite dieser Montageplatte 22c ist das Anschlagelement 22b mittels Schrauben fest montiert, auf der anderen Seite der Basisplatte 22c ist das Anschlagelement 22a mittels Schrauben fest montiert. Das Anschlagelement 22b weist den Anschlagbereich 24b auf und das Anschlagelement 22a weist den Anschlagbereich 25b auf, wobei die Funktion der Anschlagbereiche noch beschrieben wird. Die Anschlagelemente sind vorzugsweise aus Aluminium gefertigt. Es ist auch möglich und bevorzugt, dass das zweite Teil ein integral gefertigtes Bauteil ist, insbesondere dass die Anschlagelemente integral miteinander verbunden sind, also insbesondere ohne eine verbindenden separate Montageplatte oder ein vergleichbares Verbindungselement. Generell können die Anschlagbereiche auch integral ausgebildet sein oder als separate Anschlagabschnitte vorgesehen sein, die mit dem zweiten Teil verbunden sind.

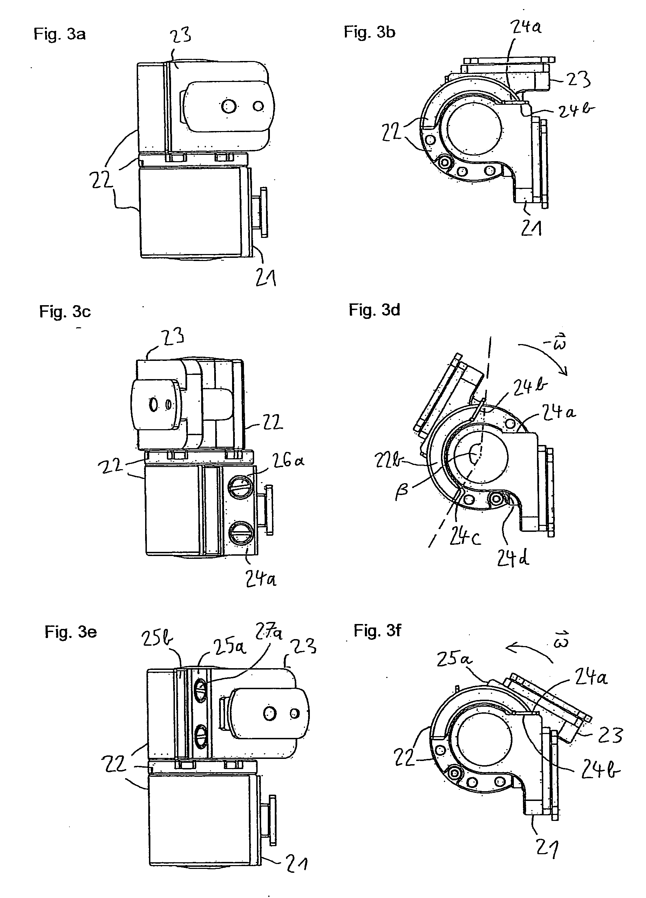

Das Anschlagelement 22a ist spiegelsymmetrisch zum Anschlagelement 22b aufgebaut. Ein Anschlagelement ist vorzugsweise so geformt, dass es dem Wandabschnitt eines Hohlzylinderelements entspricht, das insbesondere konzentrisch zur Rotationsachse A angeordnet ist. Dieser Wandabschnitt kann, wie vorliegend, die Rotationsachse A teilweise umlaufen, vorzugsweise in einem Winkelbereich β von 90° bis 270°, vorzugsweise in einem Winkelbereich β von 125° und 190°, vorzugsweise in einem Winkelbereich β von 140° bis 180°. Bei der Drehgelenkvorrichtung 20 erstreckt sich ein Anschlagelement 22a, 22b konzentrisch um die Rotationsachse in einem Winkel β von etwa 155°, was in Fig. 3d gezeigt ist. An in Umlaufrichtung um die Rotationsachse A entgegengesetzten Enden des Anschlagelements 22b weist dieses die Anschlagbereiche 24b und 24c auf, bzw. das Anschlagelement 22a die Anschlagbereiche 25b und 25c auf (Fig. 3d).

Das erste Teil 21 weist einen hohlzyinderartigen Aufnahmeabschnitt 21 a auf, der eine zylinderförmige Aussparung zur Aufnahme des Achselements 22e des zweiten Teils 22 aufweist. Integral mit dem Aufnahmeabschnitt 21a verbunden ist der Befestigungsabschnitt 21 b, an dem vorliegend mittels einer Schraube 21 c ein Federelement 21 d für eine Feder-Nut-Verbindung angebracht ist. Mittels der Feder-Nut-Verbindung können an der Drehgelenkvorrichtung 20 in komfortabler Weise Bauteile angebracht werden. Insbesondere kann, wie noch ausgeführt wird, ein erstes Bauteil, z.B. ein Halterung für einen Mikromanipulatorarm, über die Feder-Nut-Verbindung des dritten Teils 23, oder des ersten Teils 21, mit der Gelenkvorrichtung 20 verbunden sein und ein Werkzeughalter der Mikromanipulatoranordnung kann über die Feder-Nut-Verbindung des ersten Teils 21, oder des dritten Teils 23, mit der Gelenkvorrichtung 20 verbunden sein.

Die Drehgelenkvorrichtung 20 weist eine erste Anschlageinrichtung 24 auf, mit der die erste relative Rotationsbewegung in einer ersten Anschlagposition blockiert wird, in der das erste 21 und zweite Teil 22 in einer ersten Rotationsrichtung aneinander anschlagen.

Die Drehgelenkvorrichtung 20 weist ferner eine zweite Anschlageinrichtung 25 auf, mit der die zweite relative Rotationsbewegung in einer zweiten Anschlagposition blockiert wird, in der das dritte 23 und zweite Teil 22 in einer zweiten Rotationsrichtung aneinander anschlagen.

Die erste Anschlageinrichtung 24 weist zwei Anschlagbereiche 24a (in Fig. 2c nicht sichtbar) und 24b auf, wobei der Anschlagbereich 24a eine Anschlagfläche des ersten Teils 21 ist, die parallel zur Rotationsachse A ausgebildet ist, und wobei der Anschlagbereich 24b eine Anschlagfläche des zweiten Teils 22 ist, die auch parallel zur Rotationsachse A ausgebildet ist, wobei die beiden Anschlagflächen 24 a und 24b einander flächig berühren und vorzugsweise planar ausgebildet sind.

Analog ist die zweite Anschlageinrichtung 25 aufgebaut: auch sie weist zwei Anschlagbereiche 25a und 25b auf, wobei der Anschlagbereich 25a eine Anschlagfläche des dritten Teils 23 ist, die parallel zur Rotationsachse A ausgebildet ist, und wobei der Anschlagbereich 25b eine Anschlagfläche des zweiten Teils 22 ist, die auch parallel zur Rotationsachse A ausgebildet ist, wobei die beiden Anschlagflächen 25 a und 25b einander flächig berühren und vorzugsweise planar ausgebildet sind.

Wenn das erste Teil 21 rotierbar am zweiten Teil 22 angeordnet ist, bewegt sich der Anschlagbereich 24a auf den Anschlagbereich 24b zu und schlägt in der ersten Anschlagposition dort an. Dabei sei angenommen, dass das zweite Teil festgehalten wird - was bei einer bestimmungsgemäßen Verwendung der Drehgelenkvorrichtung aber nicht der Fall ist - und die Rotationsrichtung ω jene ist, bei der sich das erste Teil in einer Aufsicht auf die Drehgelenkvorrichtung 20 im Uhrzeigersinn bewegen würde - bzw. in der Untenansicht in den Fig. 3b, 3d und 3f entgegen dem Uhrzeigersinn bewegen würde. Entsprechend gilt: wenn das dritte Teil 23 rotierbar am zweiten Teil 22 angeordnet ist, bewegt sich der Anschlagbereich 25a auf den Anschlagbereich 25b zu und schlägt in der zweiten Anschlagposition dort an. Die erste Anschlagposition und die zweite Anschlagposition werden mit hoher Präzision eingestellt. Dadurch lässt sich die kombinierte Anschlagposition immer wieder präzise einstellen, was bei einer Mikromanipulatoreinrichtung, insbesondere bei einem zellbiologischen und/oder mikrobiologischen Arbeitplatz, sehr wünschenswert ist.

Wie in Fig. 3d gezeigt, sind vorliegend weitere Anschlagbereiche 24c, 24d, 25c, 25d vorhanden, mit denen das erste, zweite und dritte Teil bei einer relativen Rotationsbewegung in die negative, also entgegengesetzte, Rotationsrichtung -ω jeweils aneinander anschlagen. Der

Die Drehgelenkvorrichtung weist eine erste Fixiereinrichtung 26 und eine zweite Fixiereinrichtung 27 auf. Das erste 21 und zweite Teil 22 werden mit der ersten Fixiereinrichtung 26 in der ersten Anschlagposition gegen ein in negative Rotationsrichtung -ω gerichtetes Ablösedrehmoment solange gehalten, bis dieses ein erstes Fixierdrehmoment übersteigt. Das zweite 22 und dritte Teil 23 werden mit der zweiten Fixiereinrichtung 27 in der zweiten Anschlagposition gegen ein in negative Rotationsrichtung -ω gerichtetes Ablösedrehmoment solange gehalten, bis dieses ein zweites Fixierdrehmoment übersteigt.

Die erste Fixiereinrichtung 26 weist die zwei Permanentmagneten 26a auf, die in die erste Anschlagfläche 24a des ersten Teils 21 eingelassen sind. Die erste Fixiereinrichtung 26 weist ferner magnetische Bereiche 26b der Anschlagfläche 24b auf, die mit den Permanentmagneten 26a ein anziehende Wechselwirkung entfalten. Die Anschlagfläche 24b ist vorliegend vollständig magnetisch anziehend für die Permanentmagneten 26a ausgebildet. Die zweite Fixiereinrichtung 27 weist die zwei Permanentmagneten 27a auf, die in die erste Anschlagfläche 25a des dritten Teils 23 eingelassen sind. Die zweite Fixiereinrichtung 27 weist ferner magnetische Bereiche 27b der Anschlagfläche 25b auf, die mit den Permanentmagneten 27a ein anziehende Wechselwirkung entfalten. Die Anschlagfläche 25b ist vorliegend vollständig magnetisch anziehend für die Permanentmagneten 27a ausgebildet. Die Permanentmagneten 26a, 27a weisen eine Cobalt-Samarium-Legierung auf.

Beim Zusammenbau werden das erste Teil 21 auf das Achselement 22e des zweiten Teils 22 und das dritte Teil auf das Achselement 22d des zweiten Teils 22 aufgesteckt. Die Rotation des ersten Teils 21 am zweiten Teil 22 wird durch eine erste Führungseinrichtung 28 geführt, der das Achselement 22e des zweiten Teils 22, die zylinderförmige Aussparung des ersten Teils 21 zur Aufnahme des Achselements 22e, und die Wälzlager 28a und 28b zugeordnet sind. Die Rotation des dritten Teils 23 am zweiten Teil 22 wird durch eine zweite Führungseinrichtung 29 geführt, der das Achselement 22d des zweiten Teils 22, die zylinderförmige Aussparung des dritten Teils 23 zur Aufnahme des Achselements 22d, und die Wälzlager 29a und 29b zugeordnet sind.

Auch die Wälzlager 28a, 28b und 29a, 29b werden im Aufnahmeabschnitt des ersten 21 bzw. dritten Teils 23 aufgenommen. Der Aufnahmeabschnitt des ersten Teils 21 und des dritten Teils 23 werden nach außen jeweils durch eine Abdeckkappe 33 abgedeckt.

Die Wälzlager 28a und 28b - und analog die Wälzlager 29a und 29b - bilden eine angestellte Wälzlagereinrichtung mit einem ersten 28a und einem zweiten Wälzlager 28b, die gegeneinander mittels einer Tellerfeder 30, Federdornelement 31 zum Halten der Tellerfeder und Schraube 32 verspannt sind. Das Federdornelement 31 stellt eine Anschlagseite bereit, auf der sich die Tellerfeder 30 abstützt. Durch diese angestellte Wälzlagereinrichtung wird eine hohe Präzision der Führung erreicht, da die Walzelemente, insbesondere Kugeln, des Wälzlagers im Wesentlichen spielfrei gelagert sind. Dies hat sich insbesondere bei Verwendung der Gelenkvorrichtung bei einer Mikromanipulatorvorrichtung als vorteilhaft erwiesen, bei der es auf hohe Präzision ankommt.

Die Drehgelenkvorrichtung weist eine erste Halteeinrichtung 41 auf, die dazu ausgebildet ist, der relativen ersten Rotationsbewegung des ersten 21 und zweiten Teils 22 einen Widerstand entgegenzusetzen, zu dessen Überwindung zumindest ein erstes Losbrechdrehmoment erforderlich ist. Die Drehgelenkvorrichtung weist eine zweite Halteeinrichtung 42 auf, die dazu ausgebildet ist, der relativen zweiten Rotationsbewegung des dritten 23 und zweiten Teils 22 einen Widerstand entgegenzusetzen, zu dessen Überwindung zumindest ein zweites Losbrechdrehmoment erforderlich ist.

Die erste 41 und zweite Halteeinrichtung 42 sind jeweils als Reibungseinrichtung ausgebildet. Die erste Reibungseinrichtung 41 bewirkt während der ersten Rotationsbewegung eine erste Gleitreibung und in unbewegten Relativpositionen des ersten 21 und zweiten Teils 22 eine erste Haftreibung, zu deren Überwindung zumindest dieses erste Losbrechdrehmoment erforderlich ist. Die zweite Reibungseinrichtung 42 bewirkt während der zweiten Rotationsbewegung eine zweite Gleitreibung und in unbewegten Relativpositionen des dritten 23 und zweiten Teils 22 eine zweite Haftreibung, zu deren Überwindung zumindest dieses zweite Losbrechdrehmoment erforderlich ist.

Das erste und das zweite Fixierdrehmoment sind jeweils größer als dieses erste und/oder zweite Losbrechdrehmoment. Durch diese Abstimmung von Fixier- und Losbrechdrehmoment bleibt die Fixierung des ersten 21 und zweiten Teils erhalten, wenn unter Überwindung der zweiten Losbrechkraft die Anschlagfläche 25a des dritten Teils 23 in positiver Rotationsrichtung ω auf die Anschlagfläche 25b des zweiten Teils 22 zu bewegt wird, z.B. ausgehend von der Position in Fig. 3e und 3f. Ferner bleibt durch diese Abstimmung von Fixier- und Losbrechdrehmoment die Fixierung des dritten 23 und zweiten Teils 22 erhalten, wenn durch Rotieren des dritten Teils 23 und des zweiten Teils 22 gegenüber dem fixierten ersten Teil 21 unter Überwindung des ersten Losbrechdrehmoments die Anschlagfläche 24b des zweiten Teils 22 in negativer Rotationsrichtung -ω auf die Anschlagfläche 24a des ersten Teils 23 zu bewegt wird, z.B. ausgehend von der Position in Fig. 3c und 3d.

Die erste Reibungseinrichtung weist als Hilfselement einen elastisch verformbaren Ring 34 auf, der konzentrisch zur Rotationsachse A angeordnet ist und der zum Bewirken der ersten Gleitreibung und ersten Haftreibung zwischen dem ersten Teil 21 und dem zweiten Teil 22 eingespannt ist. Die Spannung wir erzeugt, indem der Ring 34 zwischen die Außenwand des Zylinderabschnitts 22e_1 des Achselements 22e und die Innenwände der zylinderförmigen Aussparung 34a - in Fig. 2c durch gestrichelte Linien angedeutet- eingespannt ist, wodurch also im Wesentlichen eine Druckkraft in Richtung radial zur Rotationsachse A erzeugt wird. Analog ist ein weiterer elastischer Ring 34 zwischen dem dritten Teil 23 und dem zweiten Teil 22 eingespannt und ist so ein Bestandteil der zweiten Reibungseinrichtung.

Der Ring 34 steht vorzugsweise im Wesentlichen radial zum Achselement allseitig unter Druckspannung, indem er vorzugsweise zwischen einem Achselement 22e, 22d und ersten Teil 21 oder dem dritten Teil 23 eingeklemmt ist, oder zwischen einem Achselement des ersten oder dritten Teils und dem zweiten Teil eingeklemmt ist. Der Ring ist vorzugsweise am Außendurchmesser in einer Aussparung des ersten Teils oder des dritten Teils festgelegt, d.h. er kann sich dort insbesondere nicht drehen. Dort liegt zwar auch ein Reibschluss vor, die Haftkraft ist aber höher als die Haftkraft zwischen Innenseite des Rings und dem Achselement 22e, 22d, da vorzugsweise die Fuge zwischen Außenseite des Rings und Aussparung 34a nicht geschmiert wird und die Flächenpressung (und damit Normalkraft) kleiner ist, da der Außendurchmesser des Rings größer als der Innendurchmesser ist.

Fig. 3a, b, c und d zeigen die Drehgelenkvorrichtung der Fig. 2a in Positionen analog den Positionen der Gelenkvorrichtung in Fig. 1b, 1c und 1e. Die Figuren 3a, 3c und 3e sind die perspektivischen Seitenansichten der Drehgelenkvorrichtung 20, bei der das erste Teil 21 fixiert ist. Die Figuren 3a, 3c und 3e sind entsprechend die perspektivischen Unteransichten der Drehgelenkvorrichtung 20, bei der das erste Teil 21 fixiert ist.

Fig. 3a und 3b zeigen die kombinierte Anschlagposition, in der das erste Teil 21 am zweiten Teil 22 anschlägt und beide aneinander fixiert sind und in der das dritte Teil 23 am zweiten Teil 22 anschlägt und beide aneinander fixiert sind. Das erste Teil 21 sei nun fixiert, wie in der Situation in Fig. 1b bis 1e. Dann kann das dritte Teil 23 vom Anwender wahlweise in negative Rotationsrichtung -ω oder positive Rotationsrichtung ω verdreht werden. Die kombinierte Anschlagsposition, wie in Fig. 3a, 3b bezeigt, ist mit der erfindungsgemäßen Drehgelenkvorrichtung immer wieder präzise wiederherstellbar.

Dreht der Anwender das dritte Teil 23 aus der kombinierten Anschlagsposition der Fig. 3a, 3b in Rotationsrichtung ω, dann presst das dritte Teil 23 über die Anschlagfläche 25a des dritten Teils 23 gegen die Anschlagfläche 25b des zweiten Teils 22, bis ein erstes Ablösedrehmoment erzeugt wird, und sich die magnetische Fixierung zwischen der Anschlagfläche 24a des ersten Teils 21 und der magnetischen Anschlagfläche 24b des zweiten Teils löst. Der Anwender presst unter Überwindung der Gleitreibung zwischen dem ersten Teil 21 und dem zweiten Teil 22 weiter in Rotationsrichtung und endet in einer beliebigen Relativposition gemäß Fig. 3c, 3d, in der das erste Teil 21 und das dritte Teil 23 relativ zueinander durch Haftreibung gehalten werden, so dass sich diese Relativposition durch leichte Kräfte, geringer als die Haftreibung, nicht löst. Dadurch ist eine sichere Handhabung der Mikromanipulatoranordnung mit dieser Gelenkvorrichtung möglich.

Dreht der Anwender das dritte Teil 23 aus der kombinierten Anschlagsposition der Fig. 3a, 3b entgegen der Rotationsrichtung ω, also in Richtung -ω, dann presst das erste Teil 21 über die Anschlagfläche 24a des ersten Teils 21 gegen die Anschlagfläche 24b des zweiten Teils 22, bis ein zweites Ablösedrehmoment erzeugt wird, und sich die magnetische Fixierung zwischen der Anschlagfläche 25a des dritten Teils 23 und der magnetischen Anschlagfläche 25b des zweiten Teils löst. Der Anwender presst unter Überwindung der Gleitreibung zwischen dem dritten Teil 23 und dem zweiten Teil 22 weiter in negative Rotationsrichtung und endet in einer beliebigen Relativposition gemäß Fig. 3e, 3f, in der das erste Teil 21 und das dritte Teil 23 relativ zueinander durch Haftreibung gehalten werden.

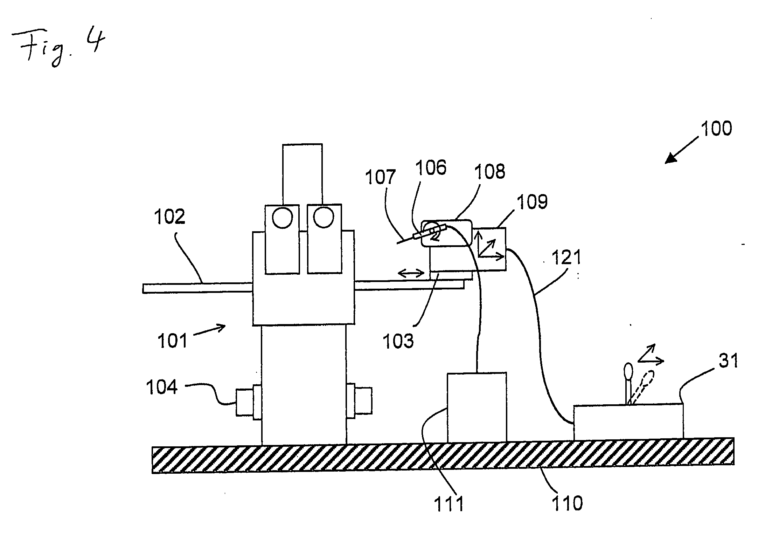

Fig. 4 zeigt einen zellbiologischen Arbeitsplatz 100, der verschiedene Geräte und die Haltevorrichtung 1 aufweist. Der Arbeitsplatz umfasst ein Mikroskop 101, den als Kapillarenhalter 106 ausgebildeten piezoelektrischen Mikroaktuator 106 mit seiner elektrischen Steuerung 111, eine Mikropositioniereinrichtung (10, 31), welche eine Bedienvorrichtung 31 mit Joystick und die über eine Kabeleinrichtung 121 mit ihr verbundene Bewegungseinrichtung 10 aufweist. Die Bewegungseinrichtung 31 ist Teil einer Mikromanipulatoranordnung. Deren Kapillarenhalter 106 ist beweglich gelagert und durch den Antrieb der Bewegungseinrichtung mit hoher Präzision bewegbar. Die Gelenkvorrichtung, z.B. wie in dem Ausführungsbeispiel der Fig. 1a bis 1e beschrieben, wird verwendet, um zwei Bauteile der Mikromanipulatoranordnung komfortabel und präzise manuell relativ zueinander präzise anzuordnen und in der gewünschten Zielposition zu fixieren.

Der Antrieb der Bewegungseinrichtung 10 weist drei Schrittmotoren (nicht gezeigt) auf, durch die die Haltevorrichtung 1 entlang der drei Achsen x', y', z', eines kartesischen Koordinatensystems bewegbar ist, gesteuert vom Ausgabesignal der Bedienvorrichtung 31 in Abhängigkeit der vom Benutzer bewirkten Positionsänderung x, y, z. Die Bedienvorrichtung steuert die Bewegung in den Richtungen der x-y-Ebene mittels Joystickauslenkung. Es kann über ein Drehrad des Joystickhebelkopfs insbesondere auch in z-Richtung gesteuert werden. Der Arbeitsplatz kann weitere Geräte aufweisen, z.B. eine Mikropumpenvorrichtung zum Pumpen von Flüssigkeiten in der Kapillare, eine zweite Joystickeinrichtung etc. Die Geräte sind in der Regel auf einem Labortisch 110 angeordnet. Eine optionale Pedalsteuervorrichtung kann unter dem Tisch angeordnet sein.

Der Benutzer dieses Arbeitsplatzes platziert bei einer typischen Anwendung, z.B. der Durchführung von ICSI, z.B. eine Petrischale mit einer Zelle auf der Arbeitplatte 102 des -hier invertierten- Mikroskops 101, bringt dann die über einen Schlitten 103 manuell verfahrbare Bewegungseinrichtung 10 in die Nähe der Petrischale, bewegt dann manuell den Kapillarenhalter 106 mit Kapillare 107 relativ schnell in Richtung der Petrischale, insbesondere bis diese in das in der Petrischale enthaltene Nährmedium eintaucht. Dabei ist von großem Vorteil, dass die Bestandteile der Mikromanipulatoranordnung mittels der erfindungsgemäßen Verbindungsvorrichtung komfortabel, insbesondere durch einhändige Bedienung, aneinander angeordnet, bzw. ausgerichtet und fixiert werden können.

Durch die erfindungsgemäße Drehgelenkvorrichtung lässt sich die Kapillarenspitze der Kapillare 107 einfach, schnell und dabei äußerst präzise aus der Zielposition und aus dem Sichtfeld des Mikroskops hinaus bewegen, und wieder präzise zurück in die Zielposition und das Sichtfeld hinein bewegen, ohne dass dafür weitere Justiervorgänge am Mikroskop oder mittels der Mikropositioniereinrichtung erforderlich wären. Durch die Gelenkvorrichtung werden die Arbeitsabläufe effizient und sind dabei ergonomisch.

Das manuelle Positionieren, also das Justieren der Positionen der Komponenten des Manipulatorarms zueinander, um die geeignete Arbeitsposition (oder Konfiguration) am Mikroskop zu erreichen, lässt sich ohne die Hilfe der Mikropositioniereinrichtung bei geeigneter Auflösung am Mikroskop mit ausreichender Genauigkeit durchführen. Es wird nur auf ca. 1-2 mm justiert, ohne dass das Probengefäß mit Probe in der Probengefäßaufnahme des Mikroskops angeordnet ist, indem mit der Kapillare auf die optische Achse im Sichtfeld des Mikroskops gezielt wird. Durch die genaue axiale Beweglichkeit des Nutensteinelements in der Nut erfolgt die translatorische Bewegung der gegeneinander zu verschiebenden Komponenten immer präzise entlang der Nut-Längsachse.

Nach der manuellen Bewegung des Kapillarenhalters erfolgt die motorgesteuerte präzise Positionierung mittels Joystick und Bewegungseinrichtung der Mikropositioniereinrichtung. Mit einer Hand justiert der Benutzer über das Fokussierrad 104 des Mikroskops den optischen Fokus zwischen Kapillarenspitze und Zelle, um den Abstand der Kapillarenspitze vom Zielpunkt an der Zelle zu beobachten. In der Nähe der Zelle erfolgt durch geringere Auslenkung des Joysticks die Feinsteuerung im Bereich von hier 50 nm bis 15 µm. Bei dieser Anwendung ist von Vorteil, das die Bedienung des Arbeitplatzes und seiner Geräte, insbesondere der Gelenkvorrichtung 1', einhändig, intuitiv und komfortabel erfolgt.

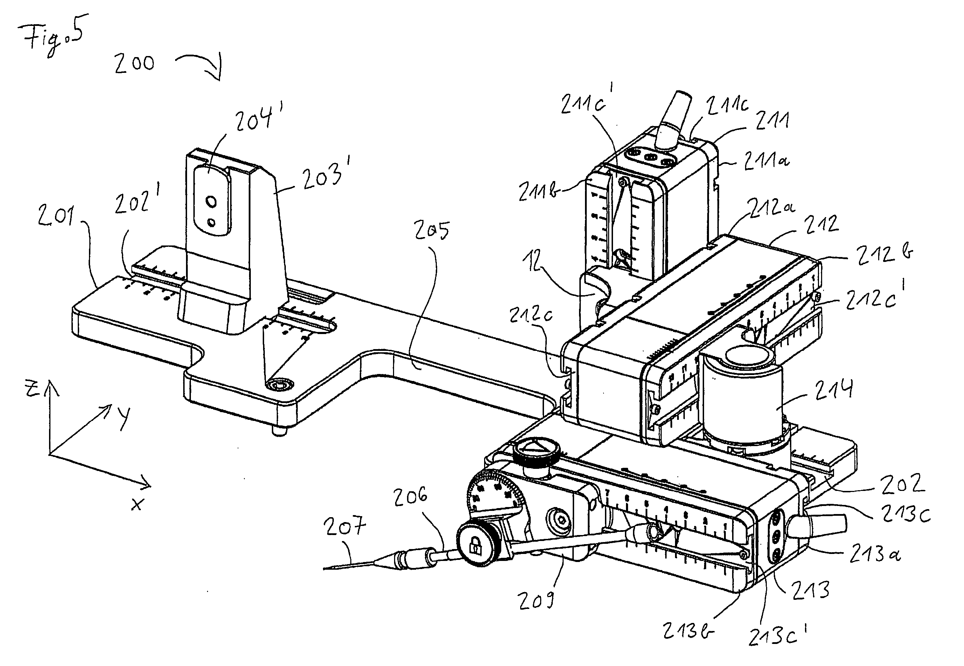

Fig. 5 zeigt eine Mikromanipulatoranordnung 200, die eine erfindungsgemäße Gelenkvorrichtung 214 aufweist, die an einem Arbeitsplatz zum Einsatz kommen kann, wie er in Fig. 4 gezeigt ist.

Die Mikromanipulatoranordnung 200 weist den Haltearm 201 auf. Er weist den Nutabschnitt 202 und den Nutabschnitt 202' auf. Ein Haltemittel 203' ist als Winkelverbinder ausgestaltet und weist zwei Nutensteine 204' auf. Ein zweites, dem ersten Haltemittel 203' gleichendes Haltemittel 203 ist nicht sichtbar, da es von der Bewegungseinrichtung 211, 212, 213 abgeschirmt wird, die es hält. Der Haltearm 201 wird an dem Stativ eines Mikroskops befestigt. Auf beiden Seiten der zentralen Aussparung 205 des Haltearms 201 lassen sich an den beiden Haltemitteln 203', 203 Anordnungen anbringen, z.B. zwei Bewegungseinrichtungen.

Eine Bewegungseinrichtung dient der Mikropositionierung eines Werkzeugs, insbesondere der Kapillare 207 mit Kapillarenhalter 206 und Haltevorrichtung 209. Die Bewegungseinrichtung weist drei Hauptkomponenten auf, die Motoreinheit 211 zum Bewegen in z-Richtung, die Motoreinheit 212 zum Verfahren in y-Richtung und die Motoreinheit 213 zum Verfahren in x-Richtung. Eine Motoreinheit 211, 212, 213 weist jeweils einen ersten Plattenabschnitt 211a, 212a, 213a mit Nutabschnitt 211c, 212c, 213c auf, und einen angetriebenen, jeweils gegenüber dem Plattenabschnitt 211a, 212a, 213a linear beweglich angeordneten zweiten Plattenabschnitt 211b, 212b, 213b mit Nutabschnitt 211c', 212c', 213c'. Zwischen dem ersten Plattenabschnitt 211a, 212a und dem zweiten Plattenabschnitt 211b, 212b ist jeweils ein Winkelverbinder 12 als Verbindungselement angeordnet.

Zwischen dem ersten Plattenabschnitt 213a und dem zweiten Plattenabschnitt 212b ist ein schwenkbares Verbindungselement 214, eine erfindungsgemäße Gelenkvorrichtung, angeordnet, das ein manuelles Schwenken der Motoreinheit 213 mit daran befestigten Komponenten um die z-Achse erlaubt, und ein präzises Anordnen der Kapillare 207 in Zielposition ermöglicht. Die Gelenkvorrichtung 214 kann die oben beschriebene Drehgelenkvorrichtung 20 sein. In diesem Fall ist das dritte Teil 23 der Drehgelenkvorrichtung 20 über die Nut-Feder-Verbindung mit Federelement 23d und Nut 212c' des Plattenabschnitt 212c mit dem Plattenabschnitt 212c verbunden und das erste Teil 21 ist über die Nut-Feder-Verbindung mit Federelement 21 d und Nut 213c des Plattenabschnitt 213a mit dem Plattenabschnitt 213a verbunden. Durch die Drehgelenkvorrichtung 20 ist die Bauteilgruppe 213, 209, 206, 207 schwenkbar mit dem Plattenabschnitt 212c verbunden. Auf diese Weise wird bei der Mikromanipulatoranordnung in Fig. 5 eine erfindungsgemäße Gelenkvorrichtung benutzt, die ein komfortables präzises Anordnen, Ausrichten und Fixieren der Schwenkarme ermöglicht, insbesondere mittels des erfindungsgemäßen Verfahrens zur Benutzung der Gelenkvorrichtung.

## Patentansprüche

1. Gelenkvorrichtung (10; 20) für eine Mikromanipulatoranordnung, zur Führung einer Relativbewegung von Bauteilen in eine Zielposition, insbesondere eine Arbeitsposition bei der Mikromanipulatoranordnung,
mit zumindest einem ersten Teil (11; 21), einem zweiten Teil (12; 22) und einem dritten Teil (13; 23),
wobei das erste Teil (11; 21) und das zweite Teil (12; 22) zur Durchführung einer ersten Relativbewegung miteinander beweglich verbunden sind,
wobei das zweite Teil (12; 22) und das dritte Teil (13; 23) zur Durchführung einer zweiten Relativbewegung miteinander beweglich verbunden sind,
mit zumindest einer ersten Anschlageinrichtung (14; 24) und einer zweiten Anschlageinrichtung (15; 25),
wobei mit der ersten Anschlageinrichtung (14; 24) die erste Relativbewegung in einer ersten Anschlagposition blockiert wird, in der das erste (11; 21) und zweite Teil (12; 22) in einer ersten Richtung aneinander anschlagen,
wobei mit der zweiten Anschlageinrichtung (15; 25) die zweite Relativbewegung in einer zweiten Anschlagposition blockiert wird, in der das zweite (12; 22) und dritte Teil (13; 23) in einer zweiten Richtung aneinander anschlagen,
mit zumindest einer ersten Fixiereinrichtung (16; 26), die eine erste Fixierkraft bewirkt, und einer zweiten Fixiereinrichtung (17; 27), die eine zweite Fixierkraft bewirken,
wobei das erste (11; 21) und zweite Teil (12; 22) mit der ersten Fixiereinrichtung (16; 26) in der ersten Anschlagposition solange gegen eine in negative erste Richtung gerichtete Ablösekraft gehalten werden, bis diese die erste Fixierkraft übersteigt,
wobei das zweite (12; 22) und dritte Teil (13; 23) mit der zweiten Fixiereinrichtung (17; 27) in der zweiten Anschlagposition solange gegen eine in negative zweite Richtung gerichtete Ablösekraft gehalten werden, bis diese die zweite Fixierkraft übersteigt,
und wobei eine kombinierte Anschlagposition als diese Zielposition einstellbar ist, in der die erste Anschlagposition und die zweite Anschlagposition beide vorliegen, und
mit zumindest einer ersten Führungseinrichtung (18; 28) und einer zweiten Führungseinrichtung (19; 29), wobei die erste Relativbewegung durch die erste Führungseinrichtung geführt wird und die zweite Relativbewegung durch die zweite Führungseinrichtung geführt wird, wobei die erste Relativbewegung entlang einer ersten Bewegungsbahn in eine positive oder negative erste Richtung verläuft, und wobei die zweite Relativbewegung entlang einer zweiten Bewegungsbahn in eine positive oder negative zweite Richtung verläuft, wobei insbesondere die erste und zweite Bewegungsbahn parallel sind.

2. Gelenkvorrichtung gemäß Anspruch 1, wobei die erste Relativbewegung eine Rotation um eine erste Rotationsachse A ist und diese erste Richtung einer Rotation im positiven Drehsinn um die Rotationsachse A entspricht, und wobei die zweite Relativbewegung eine Rotation um eine zweite Rotationsachse B ist und diese zweite Richtung einer Rotation im positiven Drehsinn um die Rotationsachse B entspricht.

3. Gelenkvorrichtung gemäß einem der vorherigen Ansprüche, wobei die erste und die zweite Fixiereinrichtung jeweils mindestens ein Magnetelement aufweisen.

4. Gelenkvorrichtung gemäß einem der vorherigen Ansprüche,
die eine erste Halteeinrichtung aufweist, die dazu ausgebildet ist, der ersten Relativbewegung einen Widerstand entgegenzusetzen, zu dessen Überwindung zumindest eine erste Losbrechkraft erforderlich ist und
die eine zweite Halteeinrichtung aufweist, die dazu ausgebildet ist, der ersten Relativbewegung einen Widerstand entgegenzusetzen, zu dessen Überwindung zumindest eine zweite Losbrechkraft erforderlich ist.

5. Gelenkvorrichtung gemäß Anspruch 1, wobei
die erste Halteeinrichtung einer erste Reibungseinrichtung aufweist, die während der ersten Relativbewegung eine erste Gleitreibung und in unbewegten Relativpositionen des ersten und zweiten Teils eine erste Haftreibung bewirkt, zu deren Überwindung zumindest diese erste Losbrechkraft erforderlich ist und
die zweite Halteeinrichtung einer zweite Reibungseinrichtung aufweist, die während der zweiten Relativbewegung eine zweite Gleitreibung und in unbewegten Relativpositionen des ersten und zweiten Teils eine zweite Haftreibung bewirkt, zu deren Überwindung zumindest diese zweite Losbrechkraft erforderlich ist.

6. Gelenkvorrichtung gemäß Anspruch 4 oder 5, wobei die erste und die zweite Ablösekraft jeweils größer sind als diese erste und/oder zweite Losbrechkraft.

7. Gelenkvorrichtung gemäß einem der Ansprüche 4, 5 oder 6, wobei
die erste Reibungseinrichtung als Hilfselement einen elastisch verformbaren Ring aufweist, der konzentrisch zu einer ersten Rotationsachse A angeordnet ist und der zum Bewirken der ersten Gleitreibung und ersten Haftreibung zwischen dem ersten Teil und dem zweiten Teil eingespannt ist, und
die zweite Reibungseinrichtung als Hilfselement einen elastisch verformbaren Ring aufweist, der konzentrisch zu einer zweiten Rotationsachse B angeordnet ist und der zum Bewirken der zweiten Gleitreibung und zweiten Haftreibung zwischen dem zweiten Teil und dem dritten Teil eingespannt ist.

8. Gelenkvorrichtung gemäß einem der vorherigen Ansprüche, wobei das erste und das dritte Teil jeweils eine Befestigungseinrichtung zur Befestigung eines weiteren Bauteils aufweisen, insbesondere durch eine Nut-/ Feder-Verbindung.

9. Gelenkvorrichtung gemäß einem der vorherigen Ansprüche, die ein viertes Teil aufweist, wobei das dritte und das vierte Teil zur Durchführung einer dritten Relativbewegung beweglich miteinander verbunden sind, insbesondere mittels einer dritten Führungseinrichtung, mit einer dritten Anschlageinrichtung, mit der die dritte Relativbewegung in einer dritten Anschlagposition blockiert wird, in der das dritte und vierte Teil in einer dritten Richtung aneinander anschlagen, und mit einer dritten Fixiereinrichtung, mit der das dritte und vierte Teil in der dritten Anschlagposition gegen eine in negative dritte Richtung gerichtete Ablösekraft solange gehalten werden, bis diese eine dritte Ablösekraft übersteigt, und wobei eine zweite kombinierte Anschlagposition als zweite Zielposition einstellbar ist, in der die zweite Anschlagposition und die dritte Anschlagposition beide vorliegen.

10. Gelenkvorrichtung gemäß einem der vorherigen Ansprüche, wobei die erste und zweite Relativbewegung eine in Grad messbare Rotation ist und wobei die Präzision q der Einstellung der kombinierten Anschlagsposition bei q <= (+-) 5* 10-1 Grad liegt, vorzugsweise q<= (+-)10-1 Grad, vorzugsweise q<= (+-) 5* 10-2 Grad.

11. Mikromanipulatoranordnung mit der Gelenkvorrichtung gemäß einem der vorherigen Ansprüche.

12. Verwendung der Gelenkvorrichtung gemäß einem der vorherigen Ansprüche bei der Mikromanipulatoranordnung eines zellbiologischen oder mikrobiologischen Arbeitsplatzes.

13. Verfahren zur Benutzung der Gelenkvorrichtung gemäß einem der Ansprüche 1 bis 10, insbesondere bei einem Verfahren zur Mikromanipulation eines künstlichen oder biologischen Objektes, insbesondere einer lebenden Zelle oder eines Mikroorganismus, insbesondere unter Verwendung der Mikromanipulatoranordnung, aufweisend wenigstens einen der folgenden Schritte:
(i) Einstellen der Zielposition dieser Gelenkvorrichtung als eine Arbeitsposition, in der insbesondere ein mit der Gelenkvorrichtung verbundenes Mikromanipulationswerkzeug, insbesondere eine Kapillare oder ein Mikrodissektionswerkzeug, den gewünschten Abstand zum Objekt aufweist;
(ii) Ausgehend von der ersten Anschlagposition, insbesondere ausgehend von der Zielposition: Durchführung einer ersten Relativbewegung, insbesondere einer Rotation in eine Rotationsrichtung ω, zwischen dem ersten Teil und dem zweiten Teil dieser Gelenkvorrichtung, bis das erste Teil und das zweite Teil in einer ersten Relativposition angeordnet sind;
(iii) Ausgehend von der zweiten Anschlagposition, insbesondere ausgehend von der Zielposition: Durchführung einer zweiten Relativbewegung, insbesondere einer Rotation in eine entgegengesetzte Rotationsrichtung -ω, zwischen dem dritten Teil und dem zweiten Teil dieser Gelenkvorrichtung, bis das dritte Teil und das zweite Teil in einer zweiten Relativposition angeordnet sind;
(iv) Ausgehend von der in Schritt (ii) beschriebenen ersten Relativposition oder der in Schritt (iii) beschriebenen zweiten Relativposition: Durchführung einer manuellen Behandlung des ersten Teils und/oder des dritten Teils, insbesondere Entfernen und/oder Ablösen eines mit dem ersten oder dritten Teils verbundenen Mikromanipulationswerkzeugs (Werkzeugwechsel);
(v) Ausgehend von der in Schritt (ii) beschriebenen ersten Relativposition oder der in Schritt (iii) beschriebenen zweiten Relativposition: Durchführung einer Behandlung des zu manipulierenden Objektes, insbesondere Entfernen oder Hinzufügen von Kulturmedium, Puffer oder einer Lösung, Entfernen des Objektes und/oder Hinzufügen eines weiteren Objektes.
(vi) Ausgehend von der in Schritt (ii) beschriebenen ersten Relativposition und/oder der in Schritt (f) beschriebenen zweiten Relativposition: Repositionierung der Gelenkvorrichtung in die Zielposition bzw. Arbeitsposition durch manuelles Zurückschwenken aus der ersten und/oder zweiten Relativposition.

## Claims

1. Articulated apparatus (10; 20) for a micro manipulator arrangement, for guiding a relative movement of components into a target position, in particular into an operating position in the case of the micro manipulator arrangement,
having at least one first part (11; 21), one second part (12; 22) and one third part (13; 23),
wherein the first part (11; 21) and the second part (12; 22) are connected together so as to be movable for carrying out a first relative movement,
wherein the second part (12; 22) and the third part (13; 23) are connected together so as to be movable for carrying out a second relative movement,
having at least one first stop device (14; 24) and one second stop device (15; 25),
wherein by way of the first stop device (14; 24) the first relative movement is blocked in a first stop position, in which the first (11; 21) and second part (12; 22) impact against one another in a first direction,
wherein by way of the second stop device (15; 25) the second relative movement is blocked in a second stop position, in which the second (12; 22) and third part (13; 23) impact against one another in a second direction,
having at least one first fixing device (16; 26) which brings about a first fixing force and one second fixing device (17; 27) which brings about a second fixing force,
wherein the first (11; 21) and second part (12; 22) are held by way of the first fixing device (16; 26) in the first stop position in opposition to a release force which is directed in a negative first direction until said release force exceeds the first fixing force,
wherein the second (12; 22) and third part (13; 23) are held by way of the second fixing device (17; 27) in the second stop position in opposition to a release force which is directed in a negative second direction until said release force exceeds the second fixing force,
and wherein a combined stop position is settable as said target position in which the first stop position and the second stop position are both present, and
having at least one first guide device (18; 28) and one second guide device (19; 29), wherein the first relative movement is guided by the first guide device and the second relative movement is guided by the second guide device, wherein the first relative movement extends along a first path of movement into a positive or negative first direction, and wherein the second relative movement extends along a second path of movement path into a positive or negative second direction, wherein in particular the first and second paths of movement are parallel.

2. Articulated apparatus according to Claim 1, wherein the first relative movement is a rotation about a first rotational axis A and said first direction corresponds to a rotation in the positive direction of rotation about the rotational axis A, and wherein the second relative movement is a rotation about a second rotational axis B and said second direction corresponds to a rotation in the positive direction of rotation about the rotational axis B.

3. Articulated apparatus according to one of the preceding claims, wherein the first and the second fixing device have in each case at least one magnetic element.

4. Articulated apparatus according to one of the preceding claims,
said articulated apparatus having a first holding device which is realized for the purpose of opposing the first relative movement with a resistance, at least one first breakaway force being necessary to overcome said resistance and said articulated apparatus having a second holding device which is realized for the purpose of opposing the first relative movement with a resistance, at least one second breakaway force being necessary to overcome said resistance.

5. Articulated apparatus according to Claim 1, wherein
the first holding device has a first friction device which brings about a first sliding friction during the first relative movement and in non-moved relative positions of the first and second part brings about a first static friction, at least said first breakaway force being necessary to overcome said sliding and static friction and
the second holding device has a second friction device which brings about a second sliding friction during the second relative movement and in non-moved relative positions of the first and second part brings about a second static friction, at least said second breakaway force being necessary to overcome said sliding and static friction.

6. Articulated apparatus according to Claim 4 or 5, wherein the first and the second release force are in each case greater than said first and/or second breakaway force.

7. Articulated apparatus according to one of Claims 4, 5 or 6, wherein
the first friction device has an elastically deformable ring as an auxiliary element which is arranged concentrically with respect to a first rotational axis A and which is clamped between the first part and the second part for bringing about the first sliding friction and first static friction and
the second friction device has an elastically deformable ring as an auxiliary element which is arranged concentrically with respect to a second rotational axis B and which is clamped between the second part and the third part for bringing about the second sliding friction and second static friction.

8. Articulated apparatus according to one of the preceding claims, wherein the first and the third part have in each case a fastening device for fastening a further component, in particular by means of a groove / tongue joint.

9. Articulated apparatus according to one of the preceding claims, said articulated apparatus having a fourth part, wherein the third and the fourth part are connected together so as to be movable for carrying out a third relative movement, in particular by means of a third guide device, having a third stop device, by way of which the third relative movement is blocked in a third stop position in which the third and fourth part impact against one another in a third direction, and having a third fixing device by way of which the third and fourth part are held in the third stop position in opposition to a release force which is directed into a negative third direction until said release force exceeds a third fixing force and wherein a second combined stop position is settable as a second target position in which the second stop position and the third stop position are both present.

10. Articulated apparatus according to one of the preceding claims, wherein the first and second relative movement is a rotation which can be measured in degrees and wherein the precision q of the setting of the combined stop position where q is <= (+-) 5* is 10-1 degrees, where q<= (+-) is preferably 10-1 degrees and where q<= (+-) 5* is preferably 10-2 degrees.

11. Micro manipulator arrangement having the articulated apparatus according to one of the preceding claims.

12. Use of the articulated apparatus according to one of the preceding claims with the micro manipulator arrangement of a cytobiological or microbiological workstation.

13. Method for utilizing the articulated apparatus according to one of Claims 1 to 10, in particular in the case of a method for the micro manipulation of an artificial or biological object, in particular of a living cell or a micro organism, in particular using the micro manipulator arrangement, having at least one of the following steps:
(i) set the target position of said articulated apparatus as an operating position in which, in particular, a micro manipulation tool which is connected to the articulated apparatus, in particular a capillary tube or a micro dissection tool, is at the desired distance to the object;
(ii) proceeding from the first stop position, in particular proceeding from the target position: carry out a first relative movement, in particular a rotation in a rotational direction □, between the first part and the second part of said articulated apparatus, until the first part and the second part are arranged in a first relative position;
(iii) proceeding from the second stop position, in particular proceeding from the target position: carry out a second relative movement, in particular a rotation into an opposing rotational direction - □, between the third part and the second part of said articulated apparatus until the third part and the second part are arranged in a second relative position;
(iv) proceeding from the first relative position described in step (ii) or from the second relative position described in step (iii): carry out manual treatment of the first part and/or the third part, in particular remove and/or release a micro manipulation tool which is connected to the first or third part (tool change);
(v) proceeding from the first relative position described in step (ii) or the second relative position described in step (iii): carry out a treatment on the object to be manipulated, in particular remove or add culture medium, buffer or a solution, remove the object and/or add a further object.
(vi) Proceeding from the first relative position described in step (ii) and/or from the second relative position described in step (f): reposition the articulated apparatus into the target position or operating position by pivoting it back manually out of the first and/or second relative position.

## Revendications

1. Dispositif d'articulation (10 ; 20) pour un dispositif de micro-manipulation, pour le guidage d'un mouvement relatif de composants vers une position cible, plus particulièrement une position de travail pour le dispositif de micro-manipulation,
avec au moins une première partie (11 ; 21), une deuxième partie (12 ; 22) et une troisième partie (13 ; 23),
la première partie (11 ; 21) et la deuxième partie (12 ; 22) étant reliées entre elles de manière mobile pour la réalisation d'un premier mouvement relatif,
la deuxième partie (12 ; 22) et la troisième partie (13 ; 23) étant reliées entre elles de manière mobile pour la réalisation d'un deuxième mouvement relatif,
avec au moins un premier dispositif de butée (14 ; 24) et un deuxième dispositif de butée (15 ; 25),
le premier dispositif de butée (14 ; 24) permettant de bloquer le premier mouvement relatif dans une première position de butée, dans laquelle la première partie (11 ; 21) et la deuxième partie (12 ; 22) s'appuient l'une contre l'autre dans une première direction,
le deuxième dispositif de butée (15 ; 25) permettant de bloquer le deuxième mouvement relatif dans une deuxième position de butée, dans laquelle la deuxième partie (12 ; 22) et la troisième partie (13 ; 23) s'appuient l'une contre l'autre dans une deuxième direction,
avec au moins un premier dispositif de fixation (16 ; 26), qui exerce une première force de fixation, et un deuxième dispositif de fixation (17 ; 27) qui exerce une deuxième force de fixation,
la première partie (11 ; 21) et la deuxième partie (12 ; 22) étant maintenues, avec le premier dispositif de fixation (16 ; 26), dans la première position de butée contre une force de détachement orientée dans une première direction négative jusqu'à ce que celle-ci dépasse la première force de fixation,
la deuxième partie (12 ; 22) et la troisième partie (13 ; 23) étant maintenues, avec le deuxième dispositif de fixation (17 ; 27), dans la deuxième position de butée contre une force de détachement orientée dans une deuxième direction négative jusqu'à ce que celle-ci dépasse la deuxième force de fixation,
et une position de butée combinée pouvant être réglée en tant que position cible, dans laquelle la première position de butée et la deuxième position de butée existent toutes les deux, et
avec au moins un premier dispositif de guidage (18 ; 28) et un deuxième dispositif de guidage (19 ; 29), le premier mouvement relatif étant guidé par le premier dispositif de guidage et le deuxième mouvement relatif étant guidé par le deuxième dispositif de guidage, le premier mouvement relatif s'étendant le long d'une première trajectoire dans une première direction positive ou négative et le deuxième mouvement relatif s'étendant le long d'une deuxième trajectoire dans une deuxième direction positive ou négative, plus particulièrement la première et la deuxième trajectoires étant parallèles.

2. Dispositif d'articulation selon la revendication 1, le premier mouvement relatif étant une rotation autour d'un premier axe de rotation A et cette première direction correspondant à une rotation dans le sens de rotation positif autour de l'axe de rotation A et le deuxième mouvement relatif étant une rotation autour d'un deuxième axe de rotation B et cette deuxième direction correspondant à une rotation dans le sens de rotation positif autour de l'axe de rotation B.

3. Dispositif d'articulation selon l'une des revendications précédentes, le premier et le deuxième dispositifs de fixation comprenant chacun un élément magnétique.

4. Dispositif d'articulation selon l'une des revendications précédentes
qui comprend un premier dispositif de maintien, qui est conçu pour exercer une résistance au premier mouvement relatif, une première force d'arrachement étant nécessaire pour surmonter celle-ci et
qui comprend un deuxième dispositif de maintien, qui est conçu pour exercer une résistance au deuxième mouvement relatif, une deuxième force d'arrachement étant nécessaire pour surmonter celle-ci.

5. Dispositif d'articulation selon la revendication 1,
le premier dispositif de maintien comprenant un premier dispositif de friction qui provoque, pendant le premier mouvement relatif, une première friction de glissement et, dans des positions relatives immobiles de la première et de la deuxième partie, une première friction d'adhérence, au moins cette première force d'arrachement étant nécessaire pour surmonter celle-ci et
le deuxième dispositif de maintien comprenant un deuxième dispositif de friction qui provoque, pendant le premier mouvement relatif, une deuxième friction de glissement et, dans des positions relatives immobiles de la première et de la deuxième partie, une deuxième friction d'adhérence, au moins cette deuxième force d'arrachement étant nécessaire pour surmonter celle-ci.

6. Dispositif d'articulation selon la revendication 4 ou 5, la première et la deuxième forces de détachement étant supérieures à cette première et/ou deuxième force d'arrachement.

7. Dispositif selon l'une des revendications 4, 5 ou 6,
le premier dispositif de friction comprenant, en tant qu'élément auxiliaire, une bague déformable élastiquement, qui est disposée de manière concentrique par rapport à un premier axe de rotation A et qui est serrée, pour la génération de la première friction de glissement et de la première friction d'adhérence, entre la première partie et la deuxième partie et
le deuxième dispositif de friction comprenant, en tant qu'élément auxiliaire, une bague déformable élastiquement, qui est disposée de manière concentrique par rapport à un deuxième axe de rotation B et qui est serrée, pour la génération de la deuxième friction de glissement et de la deuxième friction d'adhérence, entre la deuxième partie et la troisième partie.

8. Dispositif d'articulation selon l'une des revendications précédentes, la première et la troisième partie comprenant chacune un dispositif de fixation pour la fixation d'un autre composant, plus particulièrement à l'aide d'une liaison par rainure et languette.

9. Dispositif d'articulation selon l'une des revendications précédentes, qui comprend une quatrième partie, la troisième et la quatrième parties étant reliées entre elles de manière mobile pour la réalisation d'un troisième mouvement relatif, plus particulièrement au moyen d'un troisième dispositif de guidage, avec un troisième dispositif de butée, avec lequel le troisième mouvement relatif est bloqué dans une troisième position de butée, dans laquelle la troisième et la quatrième parties s'appuient l'une contre l'autre dans une troisième direction, et avec un troisième dispositif de fixation, avec lequel la troisième et la quatrième parties sont maintenues dans la troisième position de butée contre une force de détachement orientée dans une troisième direction négative jusqu'à ce que celle-ci dépasse une troisième force de détachement et une deuxième position de butée combinée pouvant être réglée en tant que deuxième position cible dans laquelle la deuxième position de butée et la troisième position de butée existent toutes les deux.

10. Dispositif d'articulation selon l'une des revendications précédentes, le premier et le deuxième mouvements relatifs étant une rotation mesurable en degrés et la précision q du réglage de la position de butée combinée étant q <= (+-) 5*10-1 degrés, de préférence q <= (+-) 10-1 degrés, de préférence q <= (+-) 5*10-2 degrés.

11. Dispositif de micro-manipulation avec le dispositif d'articulation selon l'une des revendications précédentes.

12. Utilisation du dispositif d'articulation selon l'une des revendications précédentes, pour le dispositif de micro-manipulation d'un poste de travail de biologie cellulaire ou de microbiologie.

13. Procédé pour l'utilisation du dispositif d'articulation selon l'une des revendications 1 à 10, plus particulièrement pour un procédé de micro-manipulation d'un objet artificiel ou biologique, plus particulièrement d'une cellule vivante ou d'un micro-organisme, plus particulièrement à l'aide d'un dispositif de micro-manipulation, comprenant au moins une des étapes suivantes :
(i) réglage de la position cible de ce dispositif d'articulation en tant que position de travail, dans laquelle plus particulièrement un outil de micro-manipulation relié au dispositif d'articulation, plus particulièrement un capillaire ou un outil de micro-manipulation présente une distance souhaitée par rapport à l'objet ;
(ii) à partir de la première position de butée, plus particulièrement à partir de la position cible : réalisation d'un premier mouvement relatif, plus particulièrement d'une rotation dans un sens de rotation ω entre la première partie et la deuxième partie de ce dispositif d'articulation, jusqu'à ce que la première partie et la deuxième partie soient disposées dans une première position relative ;
(iii) à partir de la deuxième position de butée, plus particulièrement à partir de la position cible : réalisation d'un deuxième mouvement relatif, plus particulièrement d'une rotation dans un sens de rotation opposé -ω, entre la troisième partie et la deuxième partie de ce dispositif d'articulation, jusqu'à ce que la troisième partie et la deuxième partie soient disposées dans une deuxième position relative ;
(iv) à partir de la première position relative décrite à l'étape (ii) ou de la deuxième position relative décrite à l'étape (iii) : réalisation d'une manipulation manuelle de la première partie et/ou de la troisième partie, plus particulièrement retrait et/ou détachement d'un outil de micro-manipulation relié avec la première ou la troisième partie (changement d'outil) ;
(v) à partir de la première position relative décrite à l'étape (ii) ou de la deuxième position relative décrite à l'étape (iii) : réalisation d'une manipulation de l'objet à manipuler, plus particulièrement retrait ou ajoute d'un milieu de culture, d'un tampon ou d'une solution, retrait de l'objet et/ou ajout d'un autre objet.
(vi) à partir de la première position relative décrite à l'étape (ii) ou de la deuxième position relative décrite à l'étape (f) : repositionnement du dispositif d'articulation dans la position cible ou la position de travail par pivotement manuel hors de la première et/ou de la deuxième position relative.
